# EUROPÄISCHE PATENTSCHRIFT

(11) **EP 4 584 110 B1**
(45) Veröffentlichungstag und Bekanntmachung des Hinweises auf die Patenterteilung: **18.03.2026**
(21) Anmeldenummer: 23750636.5
(22) Anmeldetag: 07.08.2023
(51) Int. Cl.: B60K 35/00, G02B 27/01, B32B 17/10, B32B 27/08, B60K 35/231, B60K 35/65, B60K 35/81, F21V 8/00, B32B 1/00, G02F 1/13

(54) **ANZEIGESYSTEM FÜR EIN FAHRZEUG MIT ZWEI VERSCHIEDENEN BETRIEBSARTEN**
DISPLAY SYSTEM FOR A VEHICLE WITH TWO DIFFERENT MODES OF OPERATION
SYSTÈME D'AFFICHAGE POUR UN VÉHICULE À DEUX MODES DE FONCTIONNEMENT DIFFÉRENTS

(30) Priorität: 06.09.2022 EP 22194118
(43) Veröffentlichungstag der Anmeldung: 16.07.2025
(73) Patentinhaber: Saint-Gobain Sekurit France, 60150 Thourotte (FR)
(72) Erfinder: CAPPUCCILLI, Michele, 52134 Herzogenrath (DE); GIER, Oliver, 52134 Herzogenrath (DE); HEITZ, Thibaut, 52134 Herzogenrath (DE); GOMER, Andreas, 52134 Herzogenrath (DE)
(74) Vertreter: Feist, Florian Arno
(86) Internationale Anmeldenummer: PCT/EP2023/071771
(87) Internationale Veröffentlichungsnummer: WO 2024/052024

(56) Entgegenhaltungen:
- EP-A2- 0 896 897
- EP-B1- 0 946 893
- WO-A1-2022/073894
- DE-A1- 102020 113 716

## Beschreibung

Die Erfindung betrifft eine Anzeigesystem für ein Fahrzeug und ein damit ausgestattetes Fahrzeug.

Windschutzscheiben für Fahrzeuge, insbesondere Kraftfahrzeuge wie Personenkraftwagen, sind als Verbundscheiben (Verbundsicherheitsglas) ausgebildet, welche aus einer Außenscheibe und einer Innenscheibe bestehen, die über eine thermoplastische Zwischenschicht miteinander laminiert sind. Sie weisen typischerweise einen opaken Maskierungsbereich auf, welcher als umlaufender Randbereich ausgebildet ist und einen zentralen Durchsichtsbereich umgibt. Der opake Maskierungsbereich dient in erster Linie dazu, den zur Verklebung der Windschutzscheibe mit der Fahrzeugkarosserie verwendeten Klebstoff vor UV-Strahlung zu schützen. Ist die Windschutzscheibe mit elektrischen Funktionen ausgestattet (beispielsweise einer Heizfunktion), so können die hierfür nötigen elektrischen Anschlüsse zudem im Maskierungsbereich kaschiert werden. Der Maskierungsbereich wird typischerweise durch einen schwarzen Abdeckdruck auf der zur Zwischenschicht hingewandten Oberfläche der Außenscheibe ausgebildet.

Es ist vorgeschlagen worden, den opaken Maskierungsbereich als Anzeigefläche für ein Anzeigesystem zu nutzen. Dazu wird der Anzeigebereich mit einer reflektierenden Schicht versehen und mit einer bildgebenden Einheit, beispielsweise einem Bildschirm oder einem Projektor bestrahlt. Das an der reflektierenden Schicht der bildgebenden Einheit ist für einen Benutzer, insbesondere den Fahrer, als Anzeigebild wahrnehmbar. Beispielhaft sei auf DE102009020824A1, WO2022073894A1 und WO2022073860A1 verwiesen.

Auf diese Art können Anzeigen für den Fahrer, die bislang im Bereich des Armaturenbretts verortet waren, auf der Windschutzscheibe selbst dargestellt werden. Dies ist einerseits ästhetisch ansprechend und erhöht andererseits die Fahrsicherheit, weil der Fahrer seinen Blick weniger weit von der Fahrbahn ablenken muss, um die Anzeige abzulesen. Beispiele für solche Anzeigen sind die Fahrgeschwindigkeit, die Uhrzeit, die Motordrehzahl, die Anzeige des Navigationssystems, Informationen zu Geschwindigkeitsbeschränkungen (Verkehrsschild-Erkennung), das Bild einer rückwärts gerichteten Kamera und diverse Statusanzeigen zum Zustand des Fahrzeugs.

In einer Weiterbildung kann ein solches Anzeigesystem auch für den Beifahrer vorgesehen sein. Diesem können beispielsweise Entertainment-Inhalte auf der Windschutzscheibe dargestellt werden. Allerdings besteht dabei die Gefahr, dass der Fahrer von dem Anzeigesystem des Beifahrers gestört oder abgelenkt wird, was die Verkehrssicherheit beeinträchtigt. Es besteht daher Bedarf an Anzeigesystemen der eingangs genannten Art, welche Informationen für den Beifahrer anzeigen, ohne dass der Fahrer dadurch abgelenkt wird.

Aus WO2019034557A1 ist ein Bildschirm bekannt, der in zwei verschiedenen Betriebsarten betrieben werden kann, nämlich einem freien Sichtmodus und einem eingeschränkten Sichtmodus. Im freien Sichtmodus wird das Licht des Bildschirms über einen größeren Winkelbereich abgestrahlt als im eingeschränkten Sichtmodus. Der Bildschirm ist ein LCD-Bildschirm, welcher zwei flächige Hintergrundbeleuchtungen mit unterschiedlichem Abstrahl-Winkelbereich umfasst. Der Nutzer kann eine der beiden Hintergrundbeleuchtungen einschalten, um die jeweils gewünschte Betriebsart zu aktivieren.

Der vorliegenden Erfindung liegt die Aufgabe zugrunde, ein verbessertes Anzeigesystem für ein Fahrzeug bereitzustellen. Das Anzeigesystem soll geeignet sein, eine Anzeige für den Beifahrer des Fahrzeugs zu realisieren, ohne dass der Fahrer dadurch abgelenkt oder gestört wird. Die Anzeige für den Beifahrer soll aber andererseits für den Fahrer erkennbar sein, wenn er dies wünscht.

Die Aufgabe der vorliegenden Erfindung wird erfindungsgemäß gelöst durch ein Anzeigesystem gemäß Anspruch 1. Bevorzugte Ausgestaltungen gehen aus den Unteransprüchen hervor.

Das erfindungsgemäße Anzeigesystem für ein Fahrzeug umfasst eine Windschutzscheibe und (mindestens) einen Bildschirm. Die Windschutzscheibe weist einen transparenten Durchsichtsbereich und einem opaken Maskierungsbereich auf. Der Bildschirm ist auf einen Anzeigebereich gerichtet, welcher im Maskierungsbereich der Windschutzscheibe angeordnet ist. Die Windschutzscheibe ist im Anzeigebereich mit einer Reflexionsschicht ausgestattet, welche geeignet ist, die Strahlung des Bildschirms (zumindest teilweise) zu reflektieren, wodurch ein Anzeigebild erzeugt wird.

Der Bildschirm ist erfindungsgemäß geeignet, in einer ersten Betriebsart und in einer zweiten Betriebsart betrieben zu werden. In der ersten Betriebsart strahlt der Bildschirm in Licht in einem ersten Winkelbereich ab, in der zweiten Betriebsart strahlt der Bildschirm Licht in einem zweiten Winkelbereich ab. Der erste Winkelbereich ist kleiner als der zweite Winkelbereich.

Der Nutzer kann zwischen der ersten Betriebsart und der zweiten Betriebsart des Bildschirms wechseln. In der ersten Betriebsart wird aufgrund der kleineren Winkelbereichs ein eingeschränkter Sichtmodus realisiert, in der zweiten Betriebsart aufgrund des größeren Winkelbereichs ein freier beziehungsweise uneingeschränkter Sichtmodus. Ist das Anzeigesystem dem Beifahrer zugeordnet, so kann die erste Betriebsart gewählt werden, wenn die Anzeige den Fahrer nicht ablenken soll und daher nur durch den Beifahrer wahrnehmbar sein soll. Will der Fahrer dagegen die Anzeige ebenfalls sehen, so kann die zweite Betriebsart gewählt werden. Das sind große Vorteile der vorliegenden Erfindung.

Die Windschutzscheibe ist für ein Fahrzeug vorgesehen und kann daher auch als Fahrzeug-Windschutzscheibe bezeichnet werden. Es handelt sich in einer bevorzugten Ausgestaltung um die Windschutzscheibe eines Kraftfahrzeugs, insbesondere eines Personenkraftwagens oder Lastkraftwagens.

Die Windschutzscheibe ist typischerweise als Verbundscheibe ausgebildet und umfasst eine Außenscheibe und eine Innenscheibe, die über eine thermoplastische Zwischenschicht miteinander verbunden sind. Die Windschutzscheibe ist dafür vorgesehen, in der (bezogen auf die Fahrtrichtung) nach vorne weisenden Fensteröffnung eines Fahrzeugs den Innenraum (Fahrzeuginnenraum) gegenüber der äußeren Umgebung abzutrennen. Mit Innenscheibe wird im Sinne der Erfindung die dem Innenraum zugewandte Scheibe der Windschutzscheibe bezeichnet. Mit Außenscheibe wird die der äußeren Umgebung zugewandte Scheibe bezeichnet.

Die Windschutzscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkantenfläche. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die Außenscheibe und die Innenscheibe sind bevorzugt Glasscheiben, besonders bevorzugt gefertigt aus Kalk-Natron-Glas, wie es für Fensterscheiben üblich ist. Eine oder beide der Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Scheiben können klar sein oder auch getönt oder gefärbt. Die Dicken der Außenscheibe und der Innenscheibe betragen unabhängig voneinander bevorzugt von 0,5 mm bis 5 mm, besonders bevorzugt von 1 mm bis 3 mm.

Die thermoplastische Zwischenschicht ist (mit Ausnahme etwaiger eingelagerter Funktionsfolien, welche häufig auf Basis von PET ausgebildet sind) bevorzugt auf Basis von Polyvinylbutyral (PVB), Ethylen-Vinylacetat (EVA) oder Polyurethan (PU) ausgebildet oder aus Gemischen oder Copolymeren oder Derivaten davon, besonders bevorzugt auf Basis von PVB. Die Zwischenschicht ist typischerweise aus mindestens einer thermoplastischen Folie (Verbindungsfolie) ausgebildet, insbesondere auf Basis von PVB, EVA oder PU. Damit ist gemeint, dass die Folie größtenteils aus dem besagten Polymer besteht (Anteil größer als 50 Gew.-%). Die Folie kann außer dem Polymer weitere Zusätze enthalten, insbesondere Weichmacher. Ist die Reflexionsschicht als Reflexionsfolie ausgebildet und in die Zwischenschicht eingelagert, so umfasst die Zwischenschicht neben dieser Reflexionsfolie bevorzugt mindestens zwei Verbindungsschichten (innere und äußere Verbindungsschicht, wobei die innere Verbindungsschicht der Innenscheibe und die äußere Verbindungsschicht der Außenscheibe zugewandt ist), wobei jede der Verbindungsschichten typischerweise aus mindestens einer Verbindungsfolie ausgebildet ist, insbesondere auf Basis von PVB, EVA oder PU. Die Reflexionsfolie ist zwischen den Verbindungsschichten angeordnet. Die Dicke der Verbindungsfolie (beziehungsweise jeder Verbindungsfolie, falls mehrere vorhanden sind) beträgt bevorzugt von 0,2 mm bis 1 mm. Beispielsweise können PVB-Folien mit den Standarddicken von 0,38 mm oder 0,76 mm verwendet werden. Statt Folien können auch polymere Beschichtungen verwendet werden, insbesondere wenn die betreffende thermoplastische Schicht sehr dünn ausgebildet werden soll, beispielsweise mit einer Dicke von 0,005 mm bis 0,1 mm oder von 0,02 mm bis 0,07 mm.

Die Windschutzscheibe weist einen opaken Maskierungsbereich und einen transparenten Durchsichtsbereich auf. Mit Maskierungsbereich wird im Sinne der Erfindung ein Bereich der Windschutzscheibe bezeichnet, durch den eine Durchsicht nicht möglich ist. Die Lichttransmission des Maskierungsbereichs beträgt weniger als 10%, bevorzugt weniger als 5%, besonders bevorzugt weniger als 2% und ganz besonders bevorzugt im Wesentlichen 0%. Mit Durchsichtsbereich wird im Sinne der Erfindung ein Bereich der Windschutzscheibe bezeichnet, der eine Durchsicht durch die Windschutzscheibe ermöglicht und der zur Durchsicht vorgesehen ist. Der Durchsichtsbereich ist daher transparent. Die Lichttransmission des Durchsichtsbereichs beträgt bevorzugt mindestens 70%. Mit Lichttransmission ist dabei die Gesamttransmission gemeint, bestimmt durch das durch ECE-R 43, Anhang 3, § 9.1 festgelegte Verfahren zur Prüfung der Lichtdurchlässigkeit von Kraftfahrzeugscheiben.

In einer typischen Ausgestaltung umgibt der Maskierungsbereich den Durchsichtsbereich rahmenartig. Der Maskierungsbereich ist also umlaufend um den Durchsichtsbereich angeordnet. Typischerweise bildet der Maskierungsbereich den umlaufenden Randbereich der Windschutzscheibe und grenzt an die Seitenkante der Windschutzscheibe an. Der Maskierungsbereich ist daher in einer bevorzugten Ausgestaltung in einem umlaufenden Randbereich der Windschutzscheibe angeordnet und umgibt den Durchsichtsbereich.

In einer bevorzugten Ausgestaltung ist der Anzeigebereich in einem an die Unterkante der Windschutzscheibe angrenzenden Abschnitt des Maskierungsbereichs angeordnet. Der Anzeigebereich ist also zwischen dem Durchsichtsbereich und der Unterkante der Windschutzscheibe angeordnet. Im Falle eines rahmenartigen Maskierungsbereichs im umlaufenden Randbereich der Windschutzscheibe grenzt an jede Kante (Oberkante, Unterkante, erste und zweite Seitenkante) jeweils ein Abschnitt des Maskierungsbereichs an und der Anzeigebereich ist bevorzugt in demjenigen Abschnitt angeordnet, der an die Unterkante angrenzt.

Der Maskierungsbereich ist bevorzugt durch einen opaken, insbesondere schwarzen Aufdruck (Abdeckdruck) auf mindestens einer der Oberflächen der Außenscheibe und/oder der Innenscheibe ausgebildet, besonders bevorzugt auf der innenraumseitigen Oberfläche der Außenscheibe. Der Abdeckdruck besteht typischerweise aus einer im Siebdruckverfahren aufgebrachten und anschließenden eingebrannten Emaille, welche Glasfritten und Farbmittel (insbesondere Pigmente) enthält. Solche Abdeckdrucke sind insbesondere für Fahrzeugscheiben allgemein gebräuchlich. Das Pigment ist typischerweise ein Schwarzpigment, beispielsweise Pigmentruß (Carbon Black), Anilinschwarz, Beinschwarz, Eisenoxidschwarz, Spinellschwarz und/oder Graphit. Der Abdeckdruck weist bevorzugt eine Dicke von 5 µm bis 50 µm auf, besonders bevorzugt von 8 µm bis 25 µm.

Der Maskierungsbereich kann alternativ durch eine opake polymere Folie ausgebildet sein, welche Teil der Zwischenschicht ist und welche zwischen der Reflexionsschicht und der Außenscheibe angeordnet ist. Unter einer opaken Folie wird im Sinne der Erfindung eine Folie mit einer Lichttransmission im sichtbaren Spektralbereich von weniger als 5%, insbesondere von 0% verstanden.

Der Maskierungsbereich kann auch vollständig oder teilweise durch ein Funktionselement mit elektrisch steuerbaren Eigenschaften ausgebildet sein, welches abgedunkelt werden kann. Ein solches Funktionselement umfasst eine aktive Schicht oder Schichtenfolge zwischen zwei Flächenelektroden, mittels derer eine elektrische Spannung an die aktive Schicht(enfolge) angelegt werden kann, um ihre optischen Eigenschaften einzustellen. Funktionselemente, die derart abgedunkelt werden können, um einen opaken Maskierungsbereich zu bilden, sind insbesondere elektrochrome Funktionselemente und SPD-Funktionselemente (*suspended particle device*)*.* Der opake Maskierungsbereich liegt nur dann vor, wenn das Funktionselement im abgedunkelten Zustand vorliegt. Das Funktionselement kann auf einer der Oberflächen der Außenscheibe oder der Innenscheibe aufgebracht sein, insbesondere der innenraumseitigen Oberfläche der Außenscheibe oder der außenseitigen Oberfläche der Innenscheibe. Das Funktionselement kann alternativ als Mehrschichtfolie werden und zwischen zwei Lagen der Zwischenschicht angeordnet bereitgestellt.

In einer Weiterbildung der Erfindung liegt ein permanenter Maskierungsbereich vor, der insbesondere durch einen Abdeckdruck (alternativ durch eine opake polymere Folie) ausgebildet ist, und ein sich davon ausgehend in den Durchsichtsbereich erstreckender Bereich, der mit einem Funktionselement mit elektrisch steuerbaren Eigenschaften versehen ist (insbesondere einem elektrochromen Funktionselement). Der Anzeigebereich ist teilweise im permanenten Maskierungsbereich und teilweise im Bereich mit dem besagten Funktionselement angeordnet. Der Bereich mit dem Funktionselement gehört, abhängig vom Schaltzustand, zum Durchsichtsbereich (wenn das Funktionselement auf transparent geschaltet ist) oder zum Maskierungsbereich (wenn das Funktionselement abgedunkelt beziehungsweise auf opak geschaltet ist). Soll eine Anzeige erzeugt werden, welche vollständig oder teilweise im Bereich mit dem Funktionselement abgeordnet ist, so wird das Funktionselement abgedunkelt. Soll dagegen nur eine Anzeige erzeugt werden, die im permanenten Maskierungsbereich angeordnet ist, so kann das Funktionselement auf transparent geschaltet werden, um die Größe des Durchsichtsbereichs zu erhöhen.

Das opake Element, welches den Maskierungsbereich ausbildet (insbesondere der Abdeckdruck, die opake Polymerfolie und/oder das Funktionselement mit elektrisch steuerbaren Eigenschaften), ist in Blickrichtung hinter der Reflexionsschicht angeordnet, damit letzter vom Bildschirm bestrahlt werden kann. Die Reflexionsschicht weist also einen geringeren Abstand zum Bildschirm auf als das opake Element.

Der Bildschirm ist auf den Anzeigebereich gerichtet und bestrahlt diesen zur Erzeugung eines Anzeigebildes. Der durch den Bildschirm bestrahlte (beziehungsweise bestrahlbare) Bereich der Windschutzscheibe ist also der Anzeigebereich im Sinne der Erfindung. Im Anzeigebereich der Windschutzscheibe ist erfindungsgemäß eine Reflexionsschicht angeordnet, welche die Strahlung des Bildschirms in Richtung des Nutzers reflektiert, um das Anzeigebild zu erzeugen. Der Bildschirm bestrahlt den Anzeigebereich mit elektromagnetischer Strahlung im sichtbaren Spektralbereich zur Erzeugung des Anzeigebildes, welches der Nutzer im Maskierungsbereich wahrnimmt. Die Strahlung liegt insbesondere im Spektralbereich von 450 nm bis 650 nm, beispielsweise mit den Wellenlängen 473 nm, 550 nm und 630 nm (RGB).

Die Reflexionsschicht weist bevorzugt einen Reflexionsgrad gegenüber der Strahlung des Bildschirms von mindestens 10% auf, besonders bevorzugt mindestens 15%. Das ist vorteilhaft für eine hohe Intensität und gute Qualität des Sekundäranzeigebildes. Der Reflexionsgrad beträgt beispielsweise von 10% bis 100% oder von 15% bis 30%. Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad beziehen sich im Rahmen der vorliegenden Erfindung auf den Reflexionsgrad gemessen mit einem Einfallswinkel von 65° zur innenraumseitigen Flächennormalen, was etwa der Bestrahlung durch übliche Bildschirme entspricht. Die Angaben zum Reflexionsgrad beziehen sich auf eine Reflexionsmessung mit einer Lichtquelle, die im betrachteten Spektralbereich gleichmäßig abstrahlt mit einer normierten Strahlungsintensität von 100%.

Die Reflexionsschicht deckt mindestens den Anzeigebereich ab. Sie kann sich aber auch über den Anzeigebereich hinaus erstrecken, also zusätzlich benachbarte Bereiche der Windschutzscheibe abdecken. Das kann vorteilhaft sein, um die Reflexionsschicht nicht so exakt positionieren zu müssen oder um Darstellungsfehler im Randbereich des Anzeigebildes zu vermeiden, die infolge einer nicht perfekten Positionierung der Reflexionsschicht auftreten könnten.

Die Reflexionsschicht kann auf unterschiedliche Art und Weise ausgebildet sein. In einer ersten bevorzugten Ausgestaltung ist die Reflexionsschicht als metallhaltige Beschichtung ausgebildet. Die metallhaltige Beschichtung kann auf eine Oberfläche der Außenscheibe oder der Innenscheibe aufgebracht sein, beispielsweise der innenraumseitigen Oberfläche der Außenscheibe, der außenseitigen Oberfläche der Innenscheibe oder der innenraumseitigen Oberfläche der Innenscheibe. Alternativ kann die Beschichtung auf einer Trägerfolie bereitgestellt werden, welche zwischen zwei Lagen der thermoplastischen Zwischenschicht angeordnet ist. Die Trägerfolie bildet zusammen mit der Beschichtung eine Reflexionsfolie. Die Trägerfolie ist beispielsweise eine Folie auf Basis von Polyethylenterephthalat (PET), bevorzugt im Wesentlichen aus PET, mit einer Dicke von 20 µm bis 200 µm auf, bevorzugt von 25 µm bis 75 µm.

Die metallhaltige Beschichtung kann eine spiegelartige Metallschicht sein, welche im Wesentlichen die gesamte Strahlung des Bildschirms reflektiert (Reflexionsgrad gegenüber der Strahlung des Bildschirms im Wesentlichen 100%). Geeignete Metalle sind beispielsweise Silber oder Aluminium. Geeignete Schichtdicken betragen dabei beispielsweise von 200 nm bis 5 µm, insbesondere von 800 nm bis 1,5 µm. Die metallhaltige Beschichtung kann alternativ aus einer Mehrzahl von Dünnschichten ausgebildet sein, darunter mindestens eine Dünnschicht auf Basis eines Metalls, bevorzugt auf Basis von Silber. Beschichtungen dieser Art sind aufgrund ihrer IR-reflektierenden und elektrisch leitenden Eigenschaften auch als Sonnenschutzbeschichtungen (*solar control coating*) oder beheizbare Beschichtungen gebräuchlich. Die mindestens eine Schicht auf Basis eines Metalls enthält bevorzugt mindestens 99 Gew. % Silber und weist eine Dicke von beispielsweise von 5 nm bis 20 nm auf. Eine solche Beschichtung weist (teil-)reflektierende Eigenschaften im sichtbaren Bereich auf, so dass sie als Reflexionsfläche für das Anzeigesystem dienen kann. Die Beschichtung enthält bevorzugt außerdem dielektrische Dünnschichten. Die gewünschten Reflexionscharakteristika, insbesondere der Reflexionsgrad gegenüber der Strahlung des Bildschirms, werden insbesondere durch die Wahl der Materialien und Dicken der Einzelschichten erreicht. Die leitfähige Beschichtung kann so geeignet eingestellt werden, was auf dem technischen Gebiet üblich und dem Fachmann hinlänglich bekannt ist. Oberhalb und unterhalb der Metallschicht sind typischerweise dielektrische Schichten oder Schichtenfolgen angeordnet. Umfasst die Beschichtung mehrere Metallschichten, so ist bevorzugt jede Metallschicht jeweils zwischen zwei typischerweise dielektrischen Schichten oder Schichtenfolgen angeordnet, so dass zwischen benachbarten Metallschichten jeweils eine dielektrische Schicht oder Schichtenfolgen angeordnet ist. Die Beschichtung ist also ein Dünnschicht-Stapel mit *n* Metallschichten und (*n*+*1*) dielektrischen Schichten oder Schichtenfolgen, wobei *n* eine natürliche Zahl ist und wobei auf eine untere dielektrische Schicht oder Schichtenfolge jeweils im Wechsel eine Metallschicht und eine dielektrische Schicht oder Schichtenfolge folgt. Gebräuchliche dielektrische Schichten eines solchen Dünnschichtstapels sind beispielsweise auf Basis von Siliziumnitrid, Silizium-Metall-Mischnitriden wie Siliziumzirkoniumnitrid, Titanoxid, Aluminiumnitrid, Zinnoxid, Zinkoxid oder Zinn-Zink-Mischoxid ausgebildet und weisen eine Schichtdicke beispielsweise von 3 nm bis 200 nm auf. Üblich sind auch Blockerschichten, welche die Metallschichten vor Degeneration schützen und typischerweise als sehr dünne metallhaltige Schichten auf Basis von Niob, Titan, Nickel, Chrom und/oder Legierungen davon ausgebildet sind mit Schichtdicken von beispielsweise 0,1 nm bis 2 nm.

In einer zweiten bevorzugten Ausgestaltung ist die Reflexionsschicht als rein dielektrische Beschichtung ausgebildet. Die dielektrische Beschichtung kann wiederum auf eine Oberfläche der Außenscheibe oder der Innenscheibe aufgebracht sein, beispielsweise der innenraumseitigen Oberfläche der Außenscheibe, der außenseitigen Oberfläche der Innenscheibe oder der innenraumseitigen Oberfläche der Innenscheibe. Alternativ kann die Beschichtung auf einer Trägerfolie bereitgestellt werden (Reflexionsfolie) und zwischen zwei Lagen der Zwischenschicht eingelagert werden, wie es vorstehend im Zusammenhang mit der metallhaltigen Beschichtung beschrieben wurde. Die dielektrische Beschichtung ist bevorzugt eine Schicht (beispielsweise Dünnschicht) aus einem Material mit einem höheren Brechungsindex (gemessen bei 550 nm) als das Substrat, auf dem sie aufgebracht ist (Außenscheibe, Innenscheibe oder Trägerfolie). Die Schicht ist beispielsweise auf Basis von Aluminiumnitrid, Siliziumnitrid, Zirkoniumnitrid, Silizium-Zirkonium-Mischnitrid, Zirkoniumoxid, Zinnoxid, Zinkoxid, Zinn-Zink-Mischoxid ausgebildet, besonders bevorzugt auf Basis von Titanoxid. Die Schichtdicke beträgt beispielsweise von 100 nm bis 5 µm oder von 500 nm bis 2µm. Es können auch komplexere Mehrschicht-Beschichtungen eingesetzt werden, bei denen Schichten mit einem höheren Brechungsindex (beispielsweise auf Basis von Titanoxid oder Siliziumnitrid) und Schichten mit einem geringeren Brechungsindex (beispielsweise auf Basis von Siliziumoxid) alternierend angeordnet sind. Die reflektierende Wirkung wird dabei durch Interferenzeffekte bewirkt und lässt sich durch Wahl der Schichtdicken sehr gezielt einstellen.

In einer dritten bevorzugten Ausgestaltung ist die Reflexionsschicht als rein dielektrische polymere Folie ausgebildet, welche alternierende Einzelschichten mit unterschiedlichem Brechungsindex enthält. Die dielektrische Reflexionsfolie wird bevorzugt zwischen zwei Lagen der Zwischenschicht angeordnet und dadurch in die Zwischenschicht eingelagert. Die Folie weist keine metallhaltigen Beschichtungen auf. Sie ist eine rein dielektrische Schichtenfolge aus polymeren Schichten mit einem höheren und polymeren Schichten mit einem niedrigeren Brechungsindex, welche alternierend angeordnet sind. Zumindest eine der beiden Schichtarten ist bevorzugt auf Basis von PET ausgebildet. Die andere Schichtart kann ebenfalls auf Basis von PET ausgebildet sein, wobei die unterschiedlichen Brechungsindizes durch geeignete Zusätze erreicht werden, auf Basis eines PET-Copolymers oder auf Basis eines anderen Polymers, beispielsweise PMMA. Durch den Wechsel von Schichten mit unterschiedlichem Brechungsindex werden optische Interferenzeffekte erzielt, die für den jeweiligen Anwendungsfall geeignet eingestellt werden können (insbesondere durch Wahl der Schichtdicken und der Brechungsindizes), um reflektierende Eigenschaften in einem gewünschte Spektralbereich zu realisieren. So können reflektierende Eigenschaften im sichtbaren Spektralbereich erreicht werden, um die Folie als Reflexionsfläche für das erfindungsgemäße Anzeigesystem zu verwenden.

Der Bildschirm bestrahlt die Windschutzscheibe über die Innenscheibe mit elektromagnetischer Strahlung im sichtbaren Spektralbereich zur Erzeugung des Anzeigebildes, welches ein im Innenraum des Fahrzeugs befindlicher Benutzer wahrnehmen kann. Der Bildschirm ist also innenraumseitig der Windschutzscheibe angeordnet und bestrahlt die Windschutzscheibe über die innenraumseitige Oberfläche der Innenscheibe. Die Strahlung des Bildschirms wird an der Reflexionsschicht (teil-)reflektiert.

Der Bildschirm kann in zwei Betriebsarten betrieben werden: in einer ersten Betriebsart mit einem eingeschränkten Sichtmodus, in dem der Bildschirm in einem ersten Winkelbereich abstrahlt, und in einer zweiten Betriebsart mit einem freien oder uneingeschränkten Sichtmodus, in dem der Bildschirm mit einem zweiten Winkelbereich abstrahlt. Der erste Winkelbereich ist kleiner als der zweite Winkelbereich, wodurch der eingeschränkte Sichtmodus der ersten Betriebsart erreicht wird.

Der Nutzer kann zwischen der ersten und der zweiten Betriebsart wechseln. Dies kann durch eine manuelle oder sprachgesteuerte Eingabe des Nutzers erfolgen. In Weiterbildungen ist es auch denkbar, dass die Wahl des Betriebsmodus automatisiert durch ein Fahrassistenzsystem erfolgt, wobei beispielsweise von der zweiten auf die erste Betriebsart umgeschaltet wird, wenn das Fahrassistenzsystem eine kritische Situation erkennt.

Die Anzeige des erfindungsgemäßen Anzeigesystems ist insbesondere für einen Fahrzeuginsassen vorgesehen und diesem zugeordnet (typischerweise dem Beifahrer). Der erste Winkelbereich ist bevorzugt derart gewählt, dass dieser Fahrzeuginsasse die Anzeige erkennen kann, während ein seitlich zu ihm versetzt positionierter weiterer Fahrzeuginsasse (typischerweise der Fahrer) die Anzeige nicht erkennen kann. Der zweite Winkelbereich ist bevorzugt derart gewählt, das sowohl der besagte Fahrzeuginsasse als auch der seitlich versetzte weitere Fahrzeuginsasse die Anzeige erkennen können.

Der Winkelbereich, über den das Licht abgestrahlt wird, bestimmt den Betrachtungswinkel der Anzeige - er legt also fest, inwieweit ein Betrachter seitlich versetzt zum Anzeigebereich auf diesen blicken kann und die Anzeige immer noch erkennen kann. Die von einem Punkt des Bildschirms ausgehende Strahlung wird in Form eines Strahlkegels abgestrahlt, wobei der Winkelbereich die Ausdehnung des Strahlkegels angibt. Er kann quantitativ ausgedrückt werden als Winkel zwischen der Mantelfläche des Strahlkegels und der Flächennormalen des Bildschirms (bestimmt an dem Punkt, von dem der Strahlkegel ausgeht). In dieser Weise wird der Winkelbereich im Rahmen der vorliegenden Erfindung angegeben: er wird beschrieben als Winkel zwischen den randständigen Strahlen des Strahlkegels, welche den Strahlkegel begrenzen, zur Flächennormalen. Ein Bildschirm, welcher Licht nur exakt senkrecht aussenden würde, ausschließlich entlang der Flächennormalen und nicht in Form eines Strahlkegels, würde einen Winkelbereich von 0° aufweisen. Je weiter der Strahlkegel ausgedehnt ist, desto größer wird der Betrag des Winkelbereichs.

Es ist möglich, dass das Licht nicht in einem rotationssymmetrischen Strahlkegel abgestrahlt wird, sondern dass sich die Winkelbereich in horizontaler Richtung und vertikaler Richtung unterscheiden. Die Begriffe "horizontal" und "vertikal" beziehen sich dabei auf die Darstellung der Anzeige auf der Windschutzscheibe: der vertikale Winkelbereich legt die Ausdehnung des bestrahlten Bereichs in der vertikalen Dimension der Windschutzscheibe fest (Richtung zwischen Oberkante und Unterkante der Windschutzscheibe), der horizontale Winkelbereich die Ausdehnung des bestrahlten Bereichs in der horizontalen Dimension der Windschutzscheibe (Richtung zwischen den Seitenkanten). Es ist leicht ersichtlich aus der intendierten Anwendung, dass sich der Winkelbereich im Sinne der Erfindung in diesem Fall auf den horizontalen Winkelbereich bezieht. Der Winkelbereich wird beschrieben als Winkel zwischen den in einem horizontalen Schnitt randständigen Strahlen des Bildschirms, die in Richtung der Seitenkanten der Windschutzscheibe abgestrahlt werden, zur Flächennormalen. Der horizontale Schnitt ist dabei ein Schnitt durch diejenige Komponente des abgestrahlten Lichts, welches die Windschutzscheibe entlang einer horizontalen Linie zwischen ihren Seitenkanten bestrahlt.

Der horizontale Winkelbereich kann auch als seitlicher Winkelbereich bezeichnet werden. Der seitlicher Winkelbereich des Bildschirms bestimmt den seitlichen Winkelbereich der Anzeige. "Seitlich" bezieht sich dabei auf die bestimmungsgemäße Betrachtungssituation, wobei die Betrachter innenraumseitig der Windschutzscheibe angeordnet sind und auf die innenraumseitige Oberfläche der Innenscheibe blicken. Der seitliche Winkelbereich legt fest, inwieweit ein Betrachter, der seitlich gegenüber dem Anzeigebereich versetzt positioniert ist, die Anzeige erkennen kann. Der Winkelbereich bestimmt also den seitlichen Betrachtungswinkel der Anzeige.

Der Winkelbereich kann bestimmt werden, indem ein Betrachter auf den Blickschirm blickt und sich seitlich davon weg bewegt. Aus der Position, an der er die Anzeige gerade nicht mehr erkennen kann, lässt sich der Winkelbereich bestimmen, als Winkel der Verbindungslinie zwischen der besagten Position und der ihr zugewandten Kante des Bildschirms zur Flächennormalen des Bildschirms. Zum Vergleich von Winkelbereichen unterschiedlicher Anzeigen können diese beispielsweise mit derselben Kamera aufgenommen werden, welche seitlich vom Bildschirm weg bewegt werden, wobei die Kamera auf den Bildschirm gerichtet bleibt. Die Grenze des Winkelbereichs ist jeweils dann erreicht, wenn die Anzeige in der Kameraaufnahme nicht mehr wahrnehmbar ist.

Der erste Winkelbereich liegt typischerweise in einem Bereich von 15° bis 90°, beispielsweise von 15° bis 60° oder von 20° bis 50° oder von 20° bis 40°. Der zweite Winkelbereich liegt typischerweise in einem Bereich von 30° bis 90°, beispielsweise von 40° bis 90° oder von 50° bis 90° oder von 60° bis 80°.

Der Bildschirm ist insbesondere ausgebildet als ein hintergrundbeleuchteter transmissiver Bildgeber. Die beiden Betriebsarten werden insbesondere durch die Verwendung zweier verschiedener Hintergrundbeleuchtungen erreicht, die mit unterschiedlichem Winkelbereich abstrahlen. Der Bildschirm kann
- alternativ mit der ersten oder der zweiten Hintergrundbeleuchtung betrieben werden, wodurch die beiden Betriebsarten realisiert werden, oder
- entweder nur mit der ersten Hintergrundbeleuchtung oder mit einer Kombination aus beiden Hintergrundbeleuchtungen betrieben werden, wodurch die beiden Betriebsarten realisiert werden.

Der Bildschirm umfasst in einer bevorzugten Ausgestaltung eine erste flächige Hintergrundbeleuchtung, eine zweite flächige Hintergrundbeleuchtung und einen transmissiven Bildgeber, die in der angegebenen Reihenfolge flächig übereinander angeordnet sind. Dabei ist der transmissive Bildgeber der Windschutzscheibe zugewandt und die erste flächige Hintergrundbeleuchtung von der Windschutzscheibe abgewandt. Die Hintergrundbeleuchtungen sind bevorzugt mindestens so groß wie der transmissive Bildgeber, so dass letzter gleichmäßig bestrahlt werden kann. Eine der beiden Hintergrundbeleuchtungen strahlt Licht im ersten Winkelbereich an und die andere der beiden Hintergrundbeleuchtung strahlt Licht im zweiten Winkelbereich ab. Da das Licht der ersten Hintergrundbeleuchtung durch die zweite Hintergrundbeleuchtung hindurchtreten muss, um den transmissiven Bildgeber zu bestrahlen, ist die zweite Hintergrundbeleuchtung transparent. Damit ist gemeint, dass die zweite Hintergrundbeleuchtung einen Transmissionsgrad von mindestens 70% gegenüber der Strahlung der ersten Hintergrundbeleuchtung aufweist. Ebenso sollte die zweite Hintergrundbeleuchtung das Licht der ersten Hintergrundbeleuchtung nicht zu stark streuen - der Hazewert der zweiten Hintergrundbeleuchtung beträgt daher bevorzugt kleiner 7%, besonders bevorzugt kleiner 2%, gemessen gemäß ASTM D1003.

Der Bildschirm wird bevorzugt derart betrieben, dass die beiden Hintergrundbeleuchtungen alternativ betrieben werden. Das bedeutet, dass in der ersten Betriebsart (eingeschränkter Sichtmodus) nur die erste Hintergrundbeleuchtung betrieben wird, während die zweite Hintergrundbeleuchtung ausgeschaltet ist, und dass in der zweiten Betriebsart (freier Sichtmodus) nur die zweite Hintergrundbeleuchtung betrieben wird, während die erste Hintergrundbeleuchtung ausgeschaltet ist. Alternativ ist es aber auch denkbar, dass die erste Hintergrundbeleuchtung mit dem kleineren beziehungsweise eingeschränkten Winkelbereich durchgängig betrieben wird. In der ersten Betriebsart ist sie dann die einzige Lichtquelle, während in der zweiten Betriebsart die zweite Hintergrundbeleuchtung mit dem größeren beziehungsweise uneingeschränkten Winkelbereich zusätzlich eingeschaltet wird. Auch so wird ein freier Sichtmodus in der zweiten Betriebsart erreicht, wobei die Strahlungsintensität im ersten Winkelbereich infolge der zusätzlichen Lichtquelle stärker ist und die Anzeige im ersten Winkelbereich daher heller beziehungsweise intensiver erscheint als im übrigen (das heißt: nicht mit dem ersten Winkelbereich überlappenden) Abschnitt des zweiten Winkelbereichs. Zumindest die zweite Hintergrundbeleuchtung ist also ein- und ausschaltbar. Bevorzugt sind beide Hintergrundbeleuchtungen getrennt ein- und ausschaltbar, wobei ein Einschalten der einen Hintergrundbeleuchtung mit einem Ausschalten der anderen Hintergrundbeleuchtung einhergeht.

In einer vorteilhaften Ausgestaltung strahlt die erste flächige Hintergrundbeleuchtung Licht im ersten Winkelbereich ab und die zweite flächige Hintergrundbeleuchtung strahlt Licht im zweiten Winkelbereich ab. Die zweite Betriebsart wird also durch Verwendung der zweiten Hintergrundbeleuchtung realisiert, welche zwischen der ersten Hintergrundbeleuchtung und dem Bildgeber angeordnet ist. Die zweite Hintergrundbeleuchtung ist bevorzugt ausgebildet als ein flächiger Lichtleiter, der mit einem Leuchtmittel versehen ist, welches geeignet ist, Licht über eine Seitenkante in den Lichtleiter einzukoppeln, und mit Auskopplungsmitteln, die geeignet sind, das Licht über eine dem Bildgeber zugewandte Oberfläche aus dem Lichtleiter auszukoppeln.

Der flächige Lichtleiter ist ein schicht- oder plattenartiger Gegenstand, der geeignet ist, Licht zu leiten. Er kann auch als Lichtleiterplatte bezeichnet werden und weist zwei Hauptflächen auf und eine sich dazwischen erstreckende umlaufende Kantenfläche, die auch als Seitenkantenfläche oder kurz Seitenkante bezeichnet werden kann. Eine der Hauptflächen ist dem Bildgeber zugewandt und die andere Hauptfläche der ersten Hintergrundbeleuchtung. Geeignete Materialien für den Lichtleiter sind beispielsweise Glas oder transparente Kunststoffe wie Polymethylmethacrylat (PMMA), Polyethylenterephthalat (PET) oder Polycarbonat (PC). Das Leuchtmittel ist derart positioniert, dass das vom Leuchtmittel abgestrahlte Licht über die Seitenkante (zumindest einen Abschnitt der Seitenkante) in den Lichtleiter eingekoppelt wird. Dort breitet sich das Licht aus infolge von Totalreflexion an den Hauptfläche des Lichtleiters, worauf die lichtleitende Wirkung beruht. Das Leuchtmittel ist beispielsweise eine Leuchtdiode oder eine Mehrzahl von Leuchtdioden, die an der Seitenkante des Lichtleiters positioniert ist/sind. Der Lichtleiter ist mit Auskopplungsmitteln ausgestattet, welche dazu führen, dass das Licht über die dem Bildgeber zugewandte Oberfläche aus dem Lichtleiter ausgekoppelt wird und daraufhin den Bildgeber bestrahlt. Damit ist nicht gemeint, dass das komplette Licht ausschließlich über diese Hauptfläche ausgekoppelt werden muss - typischerweise wird ein gewisser Anteil des Lichts über die gegenüberliegende, der ersten Hintergrundbeleuchtung zugewandte Hauptfläche ausgekoppelt. Dies ist unproblematisch, wobei dieser Lichtanteil dann natürlich nicht zur Hintergrundbeleuchtung des Bildgebers beiträgt und gleichsam verloren geht. Es ist daher vorteilhaft, wenn ein möglichst großer Anteil des Lichts über die dem Bildgeber zugewandte Hauptfläche ausgekoppelt wird. Die Auskopplungsmittel können beispielsweise als lichtstreuende Strukturen ausgebildet sein, die auf einer der Hauptfläche des Lichtleiters ausgebildet sind und/oder in den Lichtleiter eingelagert sind. Ein Beispiel hierfür ist eine lokale oder vollflächige Aufrauhung oder Strukturierung mindestens einer der Hauptflächen, welche die Totalreflexion unterbindet und daher zur Auskopplung führt. Die Aufrauhung oder Strukturierung ist bevorzugt auf derjenigen Hauptfläche des Lichtleiters vorhanden, die dem Bildgeber zugewandt ist, um die Abstrahlung in diese Richtung zu optimieren. Statt der Aufrauhung können beispielsweise Mikrolinsen, Mikroprismen oder diffraktive Strukturen (wie Hologramme oder Beugungsgitter) auf der Hauptfläche angebracht oder dort ausgebildet werden. Diese Elemente können beispielsweise als vorgefertigte Elemente an der Hauptfläche angebracht, beispielsweise angeklebt werden, aus einen UV-härtenden oder thermisch härtenden Lack ausgebildet werden, der auf die Hauptfläche aufgebracht, mit einem Werkzeug strukturiert beziehungsweise geformt und dann ausgehärtet wird, oder aus der Hauptfläche des Lichtleiters selbst durch Bearbeitung mit einem Werkzeug ausgebildet werden. Als eingelagerte Auskopplungsmittel können beispielsweise Nanopartikel in den Lichtleiter eingelagert werden, insbesondere wenn der Lichtleiter aus einem polymeren Material besteht, bevorzugt mit Partikelgrößen von 150 nm bis 500 nm.

Die erste Hintergrundbeleuchtung umfasst bevorzugt ein flächiges Grundelement (Beleuchtungselement, flächiger Lichtstrahler), welches das Licht abstrahlt, und einen Mikrolamellenfilm, der die Einschränkung des Abstrahlwinkels auf den ersten Winkelbereich bewirkt. Der Mikrolamellenfilm (*micro louvre*) ist zwischen dem Grundelement und der zweiten Hintergrundbeleuchtung angeordnet, bevorzugt auf derjenigen Hauptfläche des Grundelements aufgebracht, welche der zweiten Hintergrundbeleuchtung zugewandt ist. Der Mikrolamellenfilm ist eine polymere Folie, in welcher parallele Lamellen mit Breiten und Abständen im Mikrometerbereich ausgebildet sind, welche den Winkelbereich des hindurchtretenden Lichts beschränken. Durch die Tiefe der Lamellen und die Abstände benachbarter Lamellen kann der Winkelbereich eingestellt werden. Solche Mikrolamellenfilme sind an sich bekannt und werden beispielsweise als Blickschutzfilter auf Notebook-Monitoren eingesetzt. Um den seitlichen Winkelbereich der Anzeige zu begrenzen, ist der Mikrolamellenfilm derart angeordnet, dass die Projektion der Lamellen auf die Windschutzscheibe im Wesentlichen vertikal zwischen der Oberkante und der Unterkante der Windschutzscheibe verläuft.

Das Grundelement kann ebenso wie die zweite Hintergrundbeleuchtung ausgebildet sein als flächiger Lichtleiter, der versehen ist mit einem Leuchtmittel, welches geeignet ist, Licht über eine Seitenkante in den Lichtleiter einzukoppeln, und mit Auskopplungsmitteln, die geeignet sind, das Licht über eine dem Bildgeber zugewandte Oberfläche aus dem Lichtleiter auszukoppeln. Die Leuchtmittel können bei der ersten Hintergrundleuchtung auch auf der vom Bildgeber abgewandten Hauptfläche des Lichtleiters angeordnet sein statt an der Seitenkante. Alternativ können beispielsweise Elektrolumineszenzfolien, Kaltkathodenröhren, LED-Panels (zweidimensionale LED-Anordnungen), flächige OLED-Strahler oder andere Flächenstrahler als Grundelement verwendet werden.

Die erste Hintergrundbeleuchtung kann weitere Elemente umfassen, die dem Fachmann wohlbekannt sind, beispielsweise einen Diffusor, einen oder mehrere Lichtkollimatoren oder optische Filter. Beispielsweise kann die erste Hintergrundbeleuchtung aus den folgenden Elementen aufgebaut sein, in der angegebenen Reihenfolge: Grundelement - Diffusor - Lichtkollimator(en) - Mikrolamellenfilter.

Der transmissive Bildgeber wandelt das Licht der Hintergrundbeleuchtungen in die gewünschte Anzeige um, welche dann auf die Windschutzscheibe projiziert wird. Der Bildgeber versieht das Licht der Hintergrundbeleuchtungen also gleichsam mit einer Information, wenn es durch ihn hindurchtritt. Der transmissive Bildgeber ist bevorzugt eine Flüssigkristall-Anzeigeelement (LCD-Panel).

In einer besonders vorteilhaften Ausgestaltung ist die auf die Windschutzscheibe treffende Strahlung des Bildschirms p-polarisiert. Die Strahlung ist insbesondere im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Windschutzscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Windschutzscheibe aufgespannt. Die Polarisation, also insbesondere der Anteil an p- und s-polarisierter Strahlung, wird an einem Punkt des Anzeigebereichs bestimmt, bevorzugt im geometrischen Zentrum des Anzeigebereichs. Ist die Windschutzscheibe gekrümmt, was üblicherweise der Fall ist, so hat dies Auswirkungen auf die Einfallsebene der Strahlung. Daher können in den übrigen Bereichen leicht davon abweichende Polarisationsanteile auftreten, was aus physikalischen Gründen unvermeidlich ist. Zur Bereitstellung der p-polarisierten Strahlung kann beispielsweise ein Polarisationsfilter oder ein polarisierender Strahlteiler zwischen Bildschirm und Windschutzscheibe im Strahlengang angeordnet sein.

Die Strahlung des Bildschirms trifft bevorzugt mit einem Einfallswinkel von 45° bis 70°, insbesondere von 60° bis 70° auf die Windschutzscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Windschutzscheibe reflektiert. Dadurch stellt die Reflexionsschicht die einzige signifikante Reflexionsfläche für die Strahlung dar. Würde die Strahlung auch an der innenraumseitigen Oberfläche der Innenscheibe (Luft-Glas-Übergang) signifikant reflektiert werden, so würde ein sogenanntes Geisterbild entstehen, was für den Benutzer zumindest störend, wenn nicht gar gänzlich inakzeptabel wäre. Der Einfallswinkel ist der Winkel zwischen dem Einfallsvektor der Strahlung und der innenraumseitigen Flächennormale (also die Flächennormale auf die innenraumseitige externe Oberfläche der Windschutzscheibe) im geometrischen Zentrum des Anzeigebereichs. Der Brewsterwinkel für einen Luft-Glas-Übergang im Falle von Kalk-Natron-Glas, das für Fensterscheiben allgemein üblich ist, beträgt 57,2°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Die Windschutzscheibe weist mindestens einen Anzeigebereich auf mit dem erfindungsgemäßen Bildschirm mit den zwei Betriebsarten. Die Windschutzscheibe kann außerdem einen oder mehrere weitere Anzeigebereiche aufweisen, und zwar einen oder mehrere erfindungsgemäße Anzeigebereiche (bestrahlt durch jeweils einen erfindungsgemäßen Bildschirm mit den zwei Betriebsarten) und/oder einen oder mehrere herkömmliche Anzeigebereiche (bestrahlt durch jeweils einen herkömmlichen Bildschirm mit den nur einer Betriebsarten). Sämtliche erfindungsgemäßen Anzeigebereiche sind in einer vorteilhaften Ausgestaltung dem Beifahrer zugeordnet.

Die Windschutzscheibe ist bevorzugt in einer oder in mehreren Richtungen des Raumes gebogen, wie es insbesondere für Kraftfahrzeugscheiben üblich ist. Typische Krümmungsradien liegen dabei im Bereich von etwa 10 cm bis etwa 40 m. Die innenraumseitige Oberfläche der Innenscheibe ist dabei in der Regel konkav gekrümmt, die außenseitige Oberfläche der Außenscheibe konvex. Die Windschutzscheibe kann grundsätzlich aber auch plan sein.

Die Windschutzscheibe kann durch an sich bekannte Verfahren hergestellt werden. Dabei wird ein Schichtstapel erzeugt, indem die einzelnen Bestandteile (Außenscheibe, Folie(n) der Zwischenschicht, Innenscheibe) in der erforderlichen Reihenfolge flächig aufeinander angeordnet werden. Dieser Schichtstapel wird dann zu einer Verbundscheibe laminiert. Dies erfolgt insbesondere durch an sich bekannte Verfahren, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe über die Zwischenschicht erfolgt dabei üblicherweise unter Einwirkung von Hitze, Vakuum und/oder Druck.

Ist die Reflexionsschicht eine Beschichtung auf der Außenscheibe oder der Innenscheibe, so wird diese Beschichtung bevorzugt durch physikalische Gasphasenabscheidung (PVD) auf die jeweilige Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Grundsätzlich kann die Beschichtungen aber auch beispielsweise mittels chemischer Gasphasenabscheidung (CVD), beispielsweise plasmagestützte Gasphasenabscheidung (PECVD), durch Aufdampfen oder durch Atomlagenabscheidung (*atomic layer deposition*, ALD) aufgebracht werden. Die Reflexionsschicht wird bevorzugt vor dem Verbinden der Scheiben zur Verbundscheibe (Lamination) auf die Scheibenoberfläche aufgebracht.

Wird die Reflexionsschicht dagegen als Reflexionsfolie bereitgestellt (metallhaltige oder rein dielektrische Beschichtung auf einer Trägerfolie oder rein dielektrische polymere Folie), so wird diese zwischen zwei thermoplastische Verbindungsschichten angeordnet und bilden mit diesen die Zwischenschicht aus. Die Verbindungsschichten werden bevorzugt jeweils in Form mindestens einer thermoplastischen Verbindungsfolie (insbesondere PVB-Folie) bereitgestellt. Die Reflexionsfolien können in der Regel zugekauft werden, beispielsweise als PET-Trägerfolie mit einer elektrisch leitfähigen Beschichtung oder als rein dielektrische Reflexionsfolie mit unterschiedlichen Einzelschichten, welche alternierend einen höheren und einen geringeren Brechungsindex aufweisen. Sie können hergestellt werden durch Abscheidung einer elektrisch leitfähigen Beschichtung oder rein dielektrischen Beschichtung auf einer PET-Trägerfolie, insbesondere mit den vorstehend genannten Dünnschicht-Beschichtungsverfahren, oder durch Koextrusion beziehungsweise Multiextrusion zweier Materialien mit unterschiedlichem Brechungsindex zu einer rein dielektrischen Reflexionsfolie.

Der Maskierungsbereich kann dadurch ausgebildet werden, dass eine opake Emaille-Druckfarbe auf eine Oberfläche der Scheiben, insbesondere die innenraumseitige Oberfläche der Außenscheibe, aufgebracht wird, insbesondere mittels eines Siebdruckverfahrens. Die Emaille-Druckfarbe wird dann in die Scheibenoberfläche eingebrannt, wobei sie einen opaken Abdeckdruck bilden, der den Maskierungsbereich ausbildet. Alternativ kann der Maskierungsbereich durch eine opake polymere Folie ausgebildet werden. In diesem Fall wird eine der Verbindungschichten nicht durch eine einzelne homogene Verbindungsfolie ausgebildet, sondern zusammengesetzt aus einem Abschnitt einer opaken Verbindungsfolie und einem Abschnitt einer transparenten Verbindungsfolie. Die Verbindungsschicht mit der opaken Verbindungsfolie wird zwischen der Reflexionsschicht und der Außenscheibe angeordnet. Ist der Maskierungsbereich (oder zumindest ein Teil davon) durch ein Funktionselement mit elektrisch schaltbaren optischen Eigenschaften ausgebildet, so wird das dazu nötige Schichtsystem entweder vor der Lamination auf einer der Oberflächen der Außenscheibe oder der Innenscheibe aufgebracht oder die Funktionselement wird als vorgefertigte Mehrschichtfolie bereitgestellt und vor der Lamination zwischen zwei Verbindungsschichten eingelegt.

Soll die Windschutzscheibe gebogen sein, so werden die Außenscheibe und die Innenscheibe bevorzugt vor der Lamination und bevorzugt nach etwaigen Beschichtungsprozessen einem Biegeprozess unterzogen, um sie in eine zylindrisch oder sphärisch gebogene Form zu bringen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Bei diesen Temperaturen werden die Glasscheiben plastisch verformbar und können mit an sich bekannten Biegeverfahren, beispielsweise Schwerkraftbiegen, Pressbiegen, Saugbiegen oder Kombinationen davon, in die gewünschte Form gebracht.

Die Erfindung umfasst außerdem ein Fahrzeug, welches über einen Fahrerplatz und einen Beifahrerplatz verfügt und welches mit einem erfindungsgemäßen Anzeigesystem ausgestattet ist. Die Windschutzscheibe des Fahrzeugs wird dabei als Projektionsfläche des Anzeigesystems verwendet und durch mindestens einen Bildschirm bestrahlt, der in der ersten Betriebsart und in der zweiten Betriebsart betrieben werden kann.

Der Fahrerplatz und der Beifahrerplatz sind insbesondere nebeneinander hinter der Windschutzscheibe angeordnet. Die Windschutzscheibe kann durch eine mittig angeordnete Trennlinie, die zwischen Oberkante und Unterkante verläuft, imaginär in zwei Hälften aufgeteilt werden. Dann ist eine Hälfte dem Fahrerplatz zugeordnet und (in Fahrtrichtung) vor dem Fahrerplatz angeordnet, während die andere Hälfte dem Beifahrerplatz zugeordnet und (in Fahrtrichtung) vor dem Beifahrerplatz angeordnet ist. Blicken Fahrer und Beifahrer in Fahrtrichtung gerade nach vorne, so blickt jeder durch die ihm zugeordnete Hälfte der Windschutzscheibe.

In einer vorteilhaften Ausgestaltung ist der erfindungsgemäße Anzeigebereich dem Beifahrer zugeordnet und vor dem Beifahrerplatz angeordnet. Damit ist gemeint, dass der erfindungsgemäße Bildschirm mit den zwei Betriebsarten dafür vorgesehen ist, eine Anzeige für den Beifahrer zu erzeugen. Der zugehörige Anzeigebereich ist daher in derjenigen Hälfte der Windschutzscheibe angeordnet, die dem Beifahrerplatz zugeordnet ist und auf der Seite des Beifahrerplatzes angeordnet ist. Die Vorteile des erfindungsgemäßen Anzeigesystems kommen dabei besonders vorteilhaft zum Tragen, weil der Beifahrer auf die erste Betriebsart mit dem eingeschränkten Winkelbereich schalten kann, wenn der Fahrer durch die Anzeige nicht gestört werden soll.

Es können auch mehrere Anzeigebereiche dem Beifahrer zugeordnet sein und vor dem Beifahrerplatz angeordnet sein, die durch jeweils einen eigenen Bildschirm bestrahlt werden. In diesem Fall sind bevorzugt sämtliche Bildschirme der dem Beifahrer zugeordneten Anzeigebereiche erfindungsgemäß ausgebildet und somit geeignet, in den zwei unterschiedlichen Betriebsarten betrieben zu werden.

In einer Ausgestaltung der Erfindung ist (mindestens) ein weiterer Anzeigebereich vorhanden, der dem Fahrer zugeordnet ist und vor dem Fahrerplatz angeordnet ist. Auf diesen weiteren Anzeigebereich ist ein weiterer Bildschirm gerichtet zur Erzeugung eines Anzeigebildes durch Reflexion an einer Reflexionsschicht. Es können auch mehrere Anzeigebereiche dem Fahrer zugeordnet sein und vor dem Fahrerplatz angeordnet sein, die durch jeweils einen eigenen Bildschirm bestrahlt werden.

Der dem Fahrer zugeordnete Anzeigebereich kann grundsätzlich ebenfalls durch einen erfindungsgemäßen Bildschirm mit den beiden Betriebsarten bestrahlt werden. Da eine Störung des Beifahrers durch die Anzeigen des Fahrers aber weniger kritisch ist, wird bevorzugt ein herkömmlicher Bildschirm eingesetzt, der nur geeignet ist, in einer einzigen Betriebsart (also mit einem einzigen Winkelbereich) betrieben zu werden. Da herkömmliche Bildschirme typischerweise weniger komplex und daher kostengünstiger sind, ist dies vorteilhaft im Hinblick auf die Produktionskosten. In der besagten Betriebsart strahlt der Bildschirm bevorzugt Licht im zweiten Winkelbereich ab (freier Sichtmodus), so dass auch der Beifahrer die Anzeige des Fahrers erkennen kann. Grundsätzlich dann der Bildschirm das Licht aber auch im ersten Winkelbereich abstrahlen (eingeschränkter Sichtmodus).

Es können auch mehrere Anzeigebereiche dem Fahrer zugeordnet sein und vor dem Fahrerplatz angeordnet sein, die durch jeweils einen eigenen Bildschirm bestrahlt werden. In diesem Fall sind bevorzugt sämtliche Bildschirme der dem Beifahrer zugeordneten Anzeigebereiche herkömmlich ausgebildet und somit nur geeignet, in einer einzigen Betriebsarten betrieben zu werden (bevorzugt der Betriebsart mit dem zweiten Winkelbereich und freiem Sichtmodus).

In einer Weiterbildung kann auch ein Bildschirm verwendet werden wie in WO2019034557A1. Dieser Bildschirm weist einen ersten Bereich auf, in der er in zwei unterschiedlichen Betriebsarten mit unterschiedlichen Winkelbereichen betrieben wird, und einen zweiten Bereich, in dem er nur in einer Betriebsart mit einem einzigen Winkelbereich betrieben wird. Ein solcher Bildschirm kann beispielsweise mit einer ersten und zweiten Hintergrundbeleuchtung realisiert werden, wie vorstehend beschrieben, wobei der Mikrolamellenfilm zur Einschränkung des Winkelbereichs nur im ersten Bereich des Bildschirms vorhanden ist. Im zweiten Bereich strahlt die erste Hintergrundbeleuchtung dann auch mit dem zweiten Winkelbereich ab. Ein solcher Bildschirm kann beispielsweise im Bereich der Mittelkonsole des Fahrzeugs positioniert sein und einen Anzeigebereich bestrahlten, der teilweise in der dem Fahrerplatz zugeordneten Hälfte und teilweise in der dem Beifahrerplatz zugehörigen Hälfte der Windschutzscheibe angeordnet ist. Der erste Bereich des Bildschirms mit den zwei Betriebsarten bestrahlt dann bevorzugt den Teil des Anzeigebereichs in der dem Beifahrerplatz zugehörigen Hälfte der Windschutzscheibe und der zweite Bereich des Bildschirms mit der einzelnen Betriebsart den Teil des Anzeigebereichs in der dem Fahrerplatz zugehörigen Hälfte der Windschutzscheibe.

In dem Anzeigebereich oder den Anzeigebereichen, die dem Beifahrer zugeordnet sind, werden bevorzugt Entertainment-Inhalte dargestellt, beispielsweise ein Fernsehprogramm, Videos, Computerspiele oder Internet-Daten. In dem Anzeigebereich oder den Anzeigebereichen, die dem Fahrer zugeordnet sind, werden bevorzugt Statusinformationen angezeigt, die bislang typischerweise im Bereich des Armaturenbretts angezeigt wurden, wie die Uhrzeit, Fahrtgeschwindigkeit, Motordrehzahl, Kühlwassertemperatur, Innen- oder Außentemperatur, Informationen des Entertainment-Systems (wie der derzeit verwendete Radiosender) oder Angaben eines Navigationssystems. Ebenso kann das Bild einer oder mehrere rückwärts gerichteter Kameras für den Fahrer dargestellt werden, um die klassischen Außenspiegel oder Rückspiegel zu ergänzen oder zu ersetzen. Die Darstellung dieser Informationen im Maskierungsbereich der Windschutzscheibe hat den Vorteil, dass der Fahrer seinen Blick nicht so weit vom eigentlichen Blickfeld wenden muss wie bei den herkömmlichen Anzeigen, was aus Sicherheitsgründen und aus ergonomischen Gründen vorteilhaft ist. Beim halbautonomen Fahren kann der Fahrer schneller die Kontrolle über das Fahrzeug ergreifen. Es wird eine flexiblere Mensch-Maschine-Schnittstelle bereitgestellt, bei welcher der Benutzer beispielsweise die Position der einzelnen Anzeigen selbst bestimmen kann. Das halb-virtuelle Anzeigebild erlaubt eine schnellere Rück-Fokussierung der Augen auf die Fahrbahn. Außerdem ist die Darstellung ästhetisch ansprechend.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Windschutzscheibe eines erfindungsgemäßen Anzeigesystems in einem Fahrzeug,
- Fig. 2: einen Querschnitt durch ein erfindungsgemäßes Anzeigesystem mit der Windschutzscheibe aus Figur 1,
- Fig. 3: einen Querschnitt durch die Windschutzscheibe aus Figur 1,
- Fig. 4: einen Querschnitt durch eine weitere Ausgestaltung der Windschutzscheibe eines erfindungsgemäßen Anzeigesystems,
- Fig. 5: einen Querschnitt den Bildschirm des Anzeigesystems aus Figur 2,
- Fig. 6: einen weiteren Querschnitt den Bildschirm des Anzeigesystems aus Figur 2,

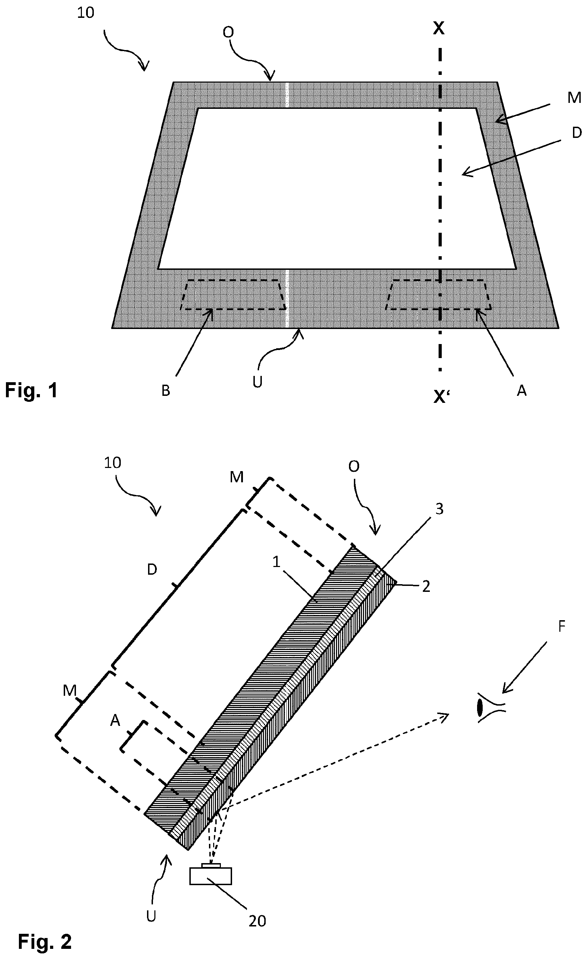

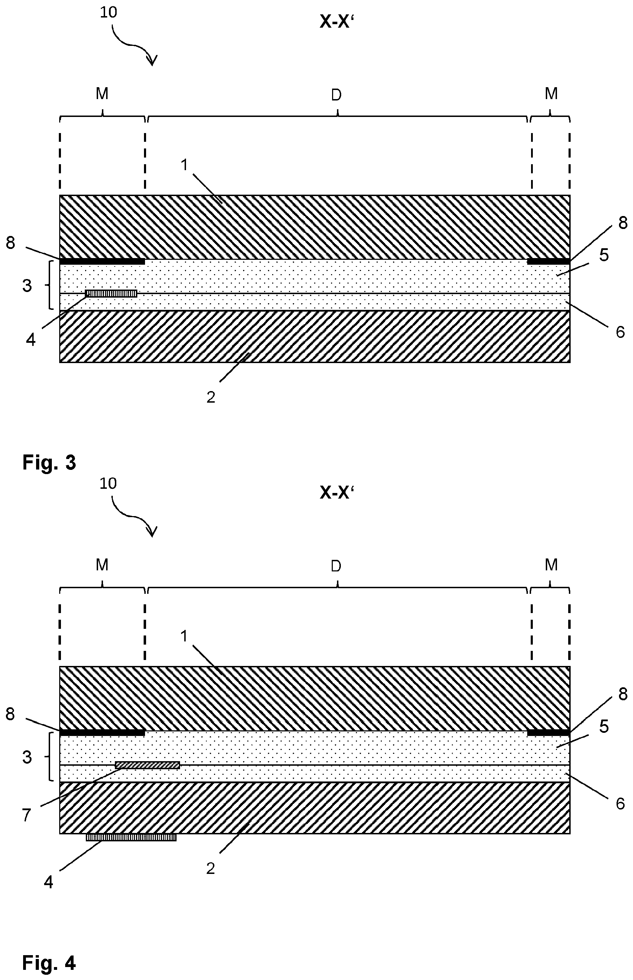

Figur 1, Figur 2 und Figur 3 zeigen je ein Detail eines erfindungsgemäßen Anzeigesystems in einem Fahrzeug. Das Anzeigesystem besteht aus einer Windschutzscheibe 10 und einem Bildschirm 20. Figur 1 zeigt dabei eine Draufsicht auf die Windschutzscheibe 10, Figur 2 einen Querschnitt durch das Anzeigesystem entlang der in Figur 1 gekennzeichneten Schnittlinie X-X' und Figur 3 einen Querschnitt durch die Windschutzscheibe 10 entlang derselben Schnittlinie mit einer größeren Anzahl von Details.

Die Windschutzscheibe 10 ist in Fahrzeug, insbesondere einen Personenkraftwagen, eingebaut. Figur 1 zeigt einen Blick auch die Windschutzscheibe 10 aus dem Innenraum des Fahrzeugs heraus. Das Fahrzeug ist mit einem Fahrerplatz und einem Beifahrerplatz ausgestattet. Der Fahrerplatz ist dabei hinter der in der Darstellung linken Hälfte der Windschutzscheibe 10 angeordnet, der Beifahrerplatz hinter der rechten Hälfte. Es handelt sich demnach um ein sogenanntes Linkslenker-Fahrzeug für den Rechtsverkehr, wie es unter anderem in Kontinentaleuropa und den USA üblich ist. Die linke Hälfte der Windschutzscheibe 10 ist dem Fahrer zugeordnet und vor dem Fahrerplatz befindlich, die rechte Hälfte ist dem Beifahrer zugeordnet und vor dem Beifahrerplatz befindlich.

Die Windschutzscheibe 10 weist einen opaken Maskierungsbereich M auf, der in einem umlaufendenden Randbereich angeordnet ist und einen transparenten Durchsichtsbereich D rahmenartig umgibt. Die Windschutzscheibe 10 weist eine nach oben (in Richtung des Fahrzeugdachs) weisende Oberkante O und eine nach unten (in Richtung des Motorraums) weisende Unterkante U auf und zwei dazwischen verlaufende Seitenkanten. Solche Maskierungsbereiche M sind bei Fahrzeugscheiben üblich - sie dienen dem Schutz des Klebstoffs, der zum Verkleben der Windschutzscheibe 10 mit der Fahrzeugkarosserie verwendet wird, vor UV-Strahlung. Außerdem können etwaige elektrische Anschlüsse oder die Seitenkante einer eingelagerten Funktionsfolie im Maskierungsbereich M versteckt werden.

Die Windschutzscheibe 10 weist beispielhaft zwei Anzeigebereiche A, B auf. Beide Anzeigebereiche A, B sind in dem an die Unterkante U grenzenden Abschnitt des Maskierungsbereichs M angeordnet. Der Anzeigebereich A ist dem Beifahrer F zugeordnet und in der vor ihm befindlichen Hälfte der Windschutzscheibe 10 angeordnet. Er ist dafür vorgesehen, eine Anzeige für den Beifahrer F darzustellen. Dies können insbesondere Entertainment-Inhalte sein, beispielsweise Filme, Internetdaten oder Computerspiele. Der Anzeigebereich B ist dem Fahrer zugeordnet und in der vor ihm befindlichen Hälfte der Windschutzscheibe 10 angeordnet. Er ist dafür vorgesehen, eine Anzeige für den Fahrer darzustellen. Dies können insbesondere Statusinformationen des Fahrzeugs sein (beispielsweise die Fahrgeschwindigkeit), Navigationshinweise oder das Bild einer rückwärts gerichteten Kamera.

Zur Erzeugung der Anzeige ist ein Bildschirm 20 auf den Anzeigebereich A gerichtet, der diesen bestrahlt. Ebenso wird der Anzeigebereich B durch einen weiteren, nicht dargestellten Bildschirm bestrahlt. Ziel der Erfindung ist es, die Anzeige im Anzeigebereich A derart zu realisieren, dass der Fahrer nicht durch sie gestört wird. Der Fahrer soll die Anzeige im Anzeigebereich A aber erkennen können, wenn er dies wünscht. Dazu wird erfindungsgemäß ein Projektor 20 eingesetzt, der in zwei verschiedenen Betriebsarten betrieben werden kann, nämlich einer ersten Betriebsart, in der das Licht des Bildschirms 20 in einem kleineren Winkelbereich abgestrahlt wird (eingeschränkter Sichtmodus), und einer zweiten Betriebsart, in der das Licht des Bildschirms 20 in einem größeren Winkelbereich abgestrahlt wird (freier/uneingeschränkter Sichtmodus). Der Fahrer beziehungsweise Beifahrer kann dabei einstellen, in welcher Betriebsart der Bildschirm 20 betrieben wird. Für den Anzeigebereich B wird ein herkömmlicher Bildschirm eingesetzt, der nur in einer einzigen Betriebsart betrieben wird. Dies ist insbesondere eine Betriebsart mit einem größeren Winkelbereich des abgestrahlten Lichts, so dass auch der Beifahrer die Anzeige erkennen kann. Die Bildschirme sind unterhalb des jeweiligen Anzeigebereichs A, B angeordnet.

Die Windschutzscheibe 10 ist aufgebaut aus einer Außenscheibe 1 und einer Innenscheibe 2, die über eine thermoplastische Zwischenschicht 3 miteinander verbunden sind. Die Außenscheibe 1 ist in Einbaulage der äußeren Umgebung zugewandt, die Innenscheibe 2 dem Fahrzeuginnenraum. Die Windschutzscheibe 10 ist der Einfachheit halber plan dargestellt, obwohl Fahrzeugscheiben üblicherweise gebogen sind, was auch im Rahmen der vorliegenden Erfindung bevorzugt ist. Die Außenscheibe 1 und die Innenscheibe 2 bestehen aus Kalk-Natron-Glas. Die Außenscheibe 1 weist beispielsweise eine Dicke von 2,1 mm auf, die Innenscheibe 2 eine Dicke von 1,6 mm.

Der Maskierungsbereich M ist durch einen schwarzen Abdeckdruck 8 ausgebildet, welcher auf der zur Zwischenschicht 3 hingewandten, innenraumseitigen Oberfläche der Außenscheibe 1 aufbracht ist. Ein solcher Abdeckdruck 8 ist im Fahrzeugbereich allgemein üblich: eine Emaille-Farbe wird mittels Siebdruck auf die Scheibenoberfläche aufgedruckt. Sie enthält ein Schwarzpigment sowie Glasfritten, welche in die Scheibenoberfläche eingebrannt werden.

Die Zwischenschicht 3 weist einen mehrlagigen Aufbau auf. Sie weist eine äußere Verbindungsschicht 5 auf, die der Außenscheibe 1 zugewandt ist, und eine innere Verbindungsschicht 6, die der Innenscheibe 2 zugewandt ist. Die Verbindungsschichten 5, 6 sind transparent und aus handelsüblichen PVB-Folien ausgebildet, die zudem Weichmacher enthalten. Die äußere Verbindungsschicht 5 weist eine Dicke von 0,76 mm auf, die innere Verbindungsschicht 6 eine Dicke von 0,38 mm.

Zwischen den Verbindungsschichten 5, 6 ist eine Reflexionschicht 4 angeordnet, welche als Reflexionsfolie ausgebildet ist. Die Reflexionsschicht 4 ist also über die äußere Verbindungsschicht 5 mit der Außenscheibe 1 verbunden und über die innere Verbindungsschicht 6 mit der Innenscheibe 2. Die Reflexionsschicht 4 ist im an die Unterkante U angrenzenden Abschnitt des Maskierungsbereichs M derart angeordnet, dass sie beide Anzeigebereiche A, B abdeckt.

Der Bildschirm 20 ist innenraumseitig der Windschutzscheibe 10 angeordnet. Die Innenscheibe 2 der Windschutzscheibe 10 ist also dem Bildschirm 20 zugewandt. Der Bildschirm 20 bestrahlt den Anzeigebereich A zur Erzeugung des Anzeigebildes. Die Strahlung des Bildschirms 20, die auf die Windschutzscheibe 10 trifft, ist im Wesentlichen rein p-polarisiert. Dies wird beispielsweise dadurch erreicht, dass ein Polarisationsfilter zwischen dem Bildschirm 20 und der Windschutzscheibe 10 angeordnet ist. Da der Bildschirm 20 die Windschutzscheibe 10 mit einem Einfallswinkel von etwa 65° bestrahlt, der nahe dem Brewster-Winkel liegt, wird die Strahlung des Bildschirms 20 nur unwesentlich an der von der Zwischenschicht 3 abgewandten, innenraumseitigen Oberfläche der Windschutzscheibe 10 reflektiert. Das Licht des Bildschirm 20 wird im Wesentlichen nur an der Reflexionsschicht 4 reflektiert, so dass ein klares Anzeigebild ohne störende Geisterbilder erzeugt wird, welches der Betrachter, in diesem Fall der Beifahrer F, wahrnehmen kann.

Die Reflexionsschicht 4 ist beispielsweise eine rein dielektrische Reflexionsfolie, welche jeweils aus einer Abfolge polymerer dielektrischer Einzelschichten aufgebaut ist, wobei die Einzelschichten alternierend einen höheren und einen niedrigeren Brechungsindex aufweisen. Durch Interferenz weisen die Reflexionsfolien reflektierende Eigenschaften auf, insbesondere gegenüber der Strahlung des Bildschirms 20.

Figur 4 zeigt einen Querschnitt durch eine weitere Windschutzscheibe 10, die für eine erfindungsgemäßes Anzeigesystem verwendet werden kann. Die Außenscheibe 1 mit dem Abdeckdruck 8, die Innenscheibe 2, die äußere Verbindungsschicht 6 und die innere Verbindungsschicht 6 sind genauso ausgestaltet wie im Beispiel der Figur 3. Zwischen der äußeren Verbindungsschicht 5 und der inneren Verbindungsschicht 6 ist eine elektrochrome Folie 7 angeordnet, und zwar in einem Bereich, der sich ausgehend vom Markierungsbereich in den Durchsichtsbereich D erstreckt. Die elektrochrome Folie 7 kann elektrisch abgedunkelt werden, wodurch der Maskierungsbereich M gleichsam vergrößert wird. Die Reflexionsschicht 4 ist auf der von der Zwischenschicht 3 abgewandten, innenraumseitigen Oberfläche der Innenscheibe 2 aufgebracht und deckt wiederum den gesamten Anzeigebereich ab, welcher in diesem Fall teilweise im statischen, durch den Abdeckdruck 8 ausgebildeten Maskierungsbereich M angeordnet ist und teilweise im dynamischen, durch die elektrochrome Folie 7 ausgebildeten Maskierungsbereich. Die Reflexionsschicht 4 ist beispielsweise eine aufgesputterte dielektrische Beschichtung aus einer Dünnschicht aus Titanoxid. Durch die elektrochrome Folie 7 kann der Maskierungsbereich M und der Anzeigebereich A also situationsbedingt vergrößert werden, wenn eine große Anzeige dargestellt werden soll und die vollständige Durchsicht durch den eigentlichen Durchsichtsbereich D nicht notwendig ist.

Die Ausgestaltungen der Reflexionsschichten 4 in den Figuren 3 und 4 sind nur beispielhaft. Alternativ kann die Reflexionsschicht 4 beispielweise durch eine Reflexionsfolie wie in Figur 3 realisiert sein, welche als PET-Trägerfolie mit einer metallhaltigen Beschichtung versehen ist. Es kann auch alternativ eine metallhaltige Beschichtung als Reflexionsschicht 4 auf der der Zwischenschicht 3 zugewandten, außenseitigen Oberfläche der Innenscheibe 2 aufgebracht sein. Die Reflexionsschicht 4 kann teilreflektierende Eigenschaften gegenüber dem Licht des Bildschirms 20 aufweisen oder nach Art eines Spiegels ausgebildet sein und im Wesentlichen die gesamte Strahlung reflektieren.

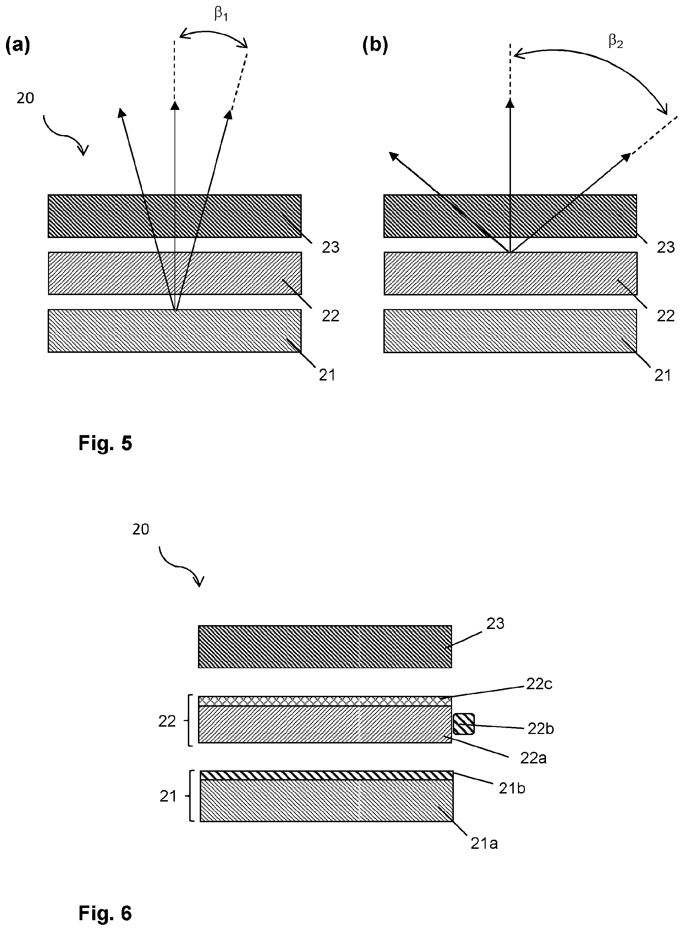

Figur 5 zeigt einen Querschnitt durch den Bildschirm 20 des Anzeigesystems aus Figur 2. Der Bildschirm 20 ist aufgebaut aus einer ersten flächigen Hintergrundbeleuchtung 21, einer zweiten flächigen Hintergrundbeleuchtung 22 und einem transmissiven Bildgeber 23. Die Elemente sind in der angegebenen Reihenfolge flächig übereinander angeordnet, wobei der Bildgeber 23 der Windschutzscheibe 10 zugewandt ist.

Der Bildgeber 23 ist ein LCD-Panel, welches alternativ durch die erste Hintergrundbeleuchtung 21 oder die zweite Hintergrundbeleuchtung 22 beleuchtet wird. Die erste Hintergrundbeleuchtung 21 strahlt dabei Licht in einem ersten Winkelbereich β₁ ab und die zweite Hintergrundbeleuchtung 22 Licht in einem zweiten Winkelbereich β₂. Der Winkelbereich β₁ ist dabei kleiner als der zweite Winkelbereich β₂. Durch Verwendung der ersten Hintergrundbeleuchtung 21 mit dem kleineren Winkelbereich β₁ wird die Betriebsart mit dem eingeschränkten Sichtmodus realisiert (Figur 5a), durch Verwendung der zweiten Hintergrundbeleuchtung 22 mit dem größere Winkelbereich β₂ die Betriebsart mit dem freien beziehungsweise uneingeschränkten Sichtmodus (Figur 5b).

Die Querschnittsdarstellung zeigt einen Schnitt durch die Komponente des abgestrahlten Lichts, welches die Windschutzscheibe 10 entlang einer horizontalen Linie zwischen ihren Seitenkanten bestrahlt. Diese Strahlungskomponente wird daher auch als horizontale Komponente bezeichnet. Die Winkelbereiche β₁, β₂ werden bestimmt als Winkel zwischen den randständigen Strahlen, die den von einem Punkt ausgehenden Strahlkegel in der horizontalen Komponente seitlich begrenzen, und der Flächennormalen an dem besagten Punkt. Die Winkelbereiche legen fest, inwieweit ein Betrachter seitlich von der eigentlich intendierten Betrachterposition (direkt vor dem Anzeigebereich) abweichen und die Anzeige trotzdem erkennen kann. Beim Betrieb im eingeschränkten Sichtmodus (Figur 5a) mit dem kleineren Winkelbereich β₁ ist die Anzeige nicht mehr zu erkennen, wenn der Betrachter um einen vergleichsweise geringen Betrag seitlich zum Anzeigebereich 4 versetzt angeordnet ist. Dies hat zur Folge, dass der Fahrer, welcher deutlich seitlich zum Anzeigebereich 4 versetzt angeordnet ist, die Anzeige nicht erkennen kann und folglich nicht durch sie gestört oder abgelenkt wird. Beim Betrieb im freien Sichtmodus (Figur 5b) mit dem größeren Winkelbereich β₂ ist die Anzeige auch aus einer seitlich versetzten Position noch deutlich zu erkennen. Der Fahrer kann in diesem Fall die Anzeige im Anzeigebereich 4 wahrnehmen.

Figur 6 zeigt einen weiteren Querschnitt durch den Bildschirm 20 aus Figur 5 mit einer größeren Anzahl an Details. Die zweite Hintergrundbeleuchtung 21 ist ausgebildet aus einem flächigen Lichtleiter 22a, beispielsweise aus Glas oder PMMA. Der Lichtleiter 22a weist zwei Hauptflächen auf, wobei eine Hauptfläche dem Bildgeber 23 und die andere Hauptfläche der ersten Hintergrundbeleuchtung 21 zugewandt ist, und eine sich dazwischen erstreckenden Seitenkante (genauer gesagt: Seitenkantenfläche). An der Seitenkante ist ein Leuchtmittel 22b angeordnet, beispielsweise eine Mehrzahl von LEDs, deren Licht bei Betrieb der zweiten Hintergrundbeleuchtung 22 über die Seitenkante in den Lichtleiter 22a eingekoppelt wird und sich in diesem durch Totalreflexion an den Hauptflächen ausbreitet. Die dem Bildgeber 23 zugewandte Hauptfläche des Lichtleiters 22a ist mit Auskopplungsmitteln 22c versehen, beispielsweise Mikroprismen oder diffraktive Strukturen. Die Auskopplungsmittel 22c sind schematisch über die gesamte Hauptfläche angeordnet, sind aber typischerweise nur auf gleichmäßig verteilte lokal begrenzte Bereiche verteilt. Mittels der Auskopplungsmittel 22c wird das Licht (teilweise) über die dem Bildgeber 23 zugewandte Hauptfläche aus dem Lichtleiter 22a ausgekoppelt, wodurch der Bildgeber 23 hintergrundbeleuchtet wird.

Die erste Hintergrundbeleuchtung 21 ist ausgebildet aus einem flächigen Beleuchtungselement 21a (Grundelement, flächiger Strahler). Das Beleuchtungselement 21a kann beispielsweise ähnlich wie die erste Hintergrundbeleuchtung aus einem Lichtleiter ausgebildet sein, über dessen Seitenkante Licht eines Leuchtmittels eingekoppelt wird, wobei das Licht durch Auskopplungsmittel über die Hauptfläche wieder ausgekoppelt wird. Aber auch andere Ausgestaltungen sind denkbar, wie Elektrolumineszenzfolien, OLEDs oder LED-Anordnungen. Auf der der zweiten Hintergrundbeleuchtung 22 zugewandten Hauptfläche des Grundelements 21a ist ein Mikrolamellenfilm 21b aufgebracht, der den eingeschränkten Winkelbereich β₁ der ersten Hintergrundbeleuchtung 21 bewirkt.

Der Bildschirm kann weitere, nicht dargestellte Bauteile enthalten, beispielsweise Bauteile zur Strahlformung (wie Kollimatoren und/oder Diffusoren) oder optische Filter (insbesondere Interferenzbeschichtungen) oder sonstige Beschichtungen (beispielsweise Antireflexionsbeschichtungen).

### Bezugszeichenliste:

- (10): Windschutzscheibe

- (1): Außenscheibe
- (2): Innenscheibe
- (3): thermoplastische Zwischenschicht
- (4): Reflexionsschicht
- (5): äußere Verbindungsschicht der Zwischenschicht 3
- (6): innere Verbindungsschicht der Zwischenschicht 3
- (7): elektrochrome Folie
- (8): Abdeckdruck

- (20): Bildschirm
- (21): erste flächige Hintergrundbeleuchtung des Bildschirms 20
- (21a): Beleuchtungselement der ersten flächigen Hintergrundbeleuchtung 21
- (21b): Mikrolamellenfilm der ersten flächigen Hintergrundbeleuchtung 21
- (22): zweite flächige Hintergrundbeleuchtung des Bildschirms 20
- (22a): flächiger Lichtleiter der zweiten flächigen Hintergrundbeleuchtung 22
- (22b): Leuchtmittel der zweiten flächigen Hintergrundbeleuchtung 22
- (22c): Auskopplungsmittel der zweiten flächigen Hintergrundbeleuchtung 22
- (23): transmissiver Bildgeber des Bildschirms 20

- (F): Betrachter / Beifahrer
- (M): Maskierungsbereich der Windschutzscheibe 10
- (D): Durchsichtsbereich der Windschutzscheibe 10
- (A): Anzeigebereich der Windschutzscheibe 10 (mit zwei Betriebsarten)
- (B): weiterer Anzeigebereich der Windschutzscheibe 10 (mit einer Betriebsart)
- (O): Oberkante der Windschutzscheibe 10
- (U): Unterkante der Windschutzscheibe 10

- (β₁): erster Winkelbereich des Bildschirms 20
- (β₂): zweiter Winkelbereich des Bildschirms 20

- X-X': Schnittlinie

## Patentansprüche

1. Anzeigesystem für ein Fahrzeug, umfassend
- eine Windschutzscheibe (10) mit einem transparenten Durchsichtsbereich (D) und einem opaken Maskierungsbereich (M) und
- einen Bildschirm (20), der auf einen im Maskierungsbereich (M) angeordneten Anzeigebereich (A) gerichtet ist,
wobei die Windschutzscheibe (10) im Anzeigebereich (A) mit einer Reflexionsschicht (4) ausgestattet ist, welche geeignet ist, die Strahlung des Bildschirms (20) zur Erzeugung eines Anzeigebildes zu reflektieren,
**dadurch gekennzeichnet, dass**
der Bildschirm (20) geeignet ist, in einer ersten Betriebsart und in einer zweiten Betriebsart betrieben zu werden, wobei der Bildschirm in der ersten Betriebsart Licht in einem ersten Winkelbereich (β₁) abstrahlt und in der zweiten Betriebsart Licht in einem zweiten Winkelbereich (β₂) abstrahlt,
wobei der erste Winkelbereich (β₁) kleiner ist als der zweite Winkelbereich (β₂).

2. Anzeigesystem nach Anspruch 1, wobei der Bildschirm (20)
- eine erste flächige Hintergrundbeleuchtung (21),
- eine zweite flächige Hintergrundbeleuchtung (22) und
- einen transmissiven Bildgeber (23)
umfasst, die in der angegebenen Reihenfolge flächig übereinander angeordnet sind, wobei eine der beiden Hintergrundbeleuchtungen (21, 22) Licht im ersten Winkelbereich (β₁) abstrahlt und die andere der beiden Hintergrundbeleuchtungen (21, 22) Licht im zweiten Winkelbereich (β₂) abstrahlt.

3. Anzeigesystem nach Anspruch 2, wobei
- die erste flächige Hintergrundbeleuchtung (21) Licht im ersten Winkelbereich (β₂) abstrahlt und
- die zweite flächige Hintergrundbeleuchtung (22) Licht im zweiten Winkelbereich (β₂) abstrahlt und ausgebildet ist als flächiger Lichtleiter (22a), der versehen ist mit einem Leuchtmittel (22b), welches geeignet ist, Licht über eine Seitenkante in den Lichtleiter (22a) einzukoppeln, und mit Auskopplungsmitteln (22c), die geeignet sind, das Licht über eine dem Bildgeber (23) zugewandte Oberfläche aus dem Lichtleiter (22a) auszukoppeln.

4. Anzeigesystem nach Anspruch 2 oder 3, wobei der transmissive Bildgeber (23) als Flüssigkristall-Anzeigeelement ausgebildet ist.

5. Anzeigesystem nach einem der Ansprüche 2 bis 4, wobei die erste flächige Hintergrundbeleuchtung (21) ein flächiges Beleuchtungselement (21a) umfasst und einen Mikrolamellenfilm (21b), der zwischen dem Beleuchtungselement (21a) und der zweiten flächigen Hintergrundbeleuchtung (22) angeordnet ist.

6. Anzeigesystem nach einem der Ansprüche 1 bis 5, wobei die Reflexionsschicht (4) ausgebildet ist als
- metallhaltige Beschichtung oder
- rein dielektrische Beschichtung oder
- rein dielektrische polymere Folie, welche alternierende Einzelschichten mit unterschiedlichem Brechungsindex enthält.

7. Anzeigesystem nach einem der Ansprüche 1 bis 6, wobei der Maskierungsbereich (M) ausgebildet ist
- durch einen Abdeckdruck (8)
- durch eine opake polymere Folie als Teil der Zwischenschicht (3) und/oder
- durch ein Funktionselement mit elektrisch steuerbaren Eigenschaften, insbesondere ein elektrochromes Funktionselement.

8. Anzeigesystem nach einem der Ansprüche 1 bis 7, wobei
- die Windschutzscheibe (10) eine Oberkante (O), eine Unterkante (U) und zwei dazwischen verlaufende Seitenkanten aufweist, und
- der Anzeigebereich (B) in einem an die Unterkante (U) angrenzenden Abschnitt des Maskierungsbereichs (M) angeordnet ist.

9. Anzeigesystem nach einem der Ansprüche 1 bis 8, wobei die auf die Windschutzscheibe (10) treffende Strahlung des Bildschirms (20) p-polarisiert ist.

10. Anzeigesystem nach einem der Ansprüche 1 bis 9, wobei die Windschutzscheibe (10) eine Verbundscheibe ist aus einer Außenscheibe (1) und einer Innenscheibe (2), die über eine thermoplastische Zwischenschicht (3) miteinander verbunden sind.

11. Fahrzeug mit einem Fahrerplatz und einem Beifahrerplatz, ausgestattet mit einem Anzeigesystem nach einem der Ansprüche 1 bis 10.

12. Fahrzeug nach Anspruch 11, wobei der Anzeigebereich (A) in derjenigen Hälfte der Windschutzscheibe (10) angeordnet ist, die auf der Seite des Beifahrerplatzes befindlich ist.

13. Fahrzeug nach Anspruch 12, wobei der erste Winkelbereich (β₁) derart gewählt ist, dass die Anzeige des Anzeigebereichs (A) vom Fahrerplatz aus nicht wahrnehmbar ist.

14. Fahrzeug nach Anspruch 12 oder 13, wobei
- ein weiterer Anzeigebereich (B) in derjenigen Hälfte der Windschutzscheibe (10) angeordnet ist, die auf der Seite des Fahrerplatzes befindlich ist,
- auf den weiteren Anzeigebereich (B) ein weiterer Bildschirm gerichtet ist und
- der weitere Bildschirm nur geeignet ist, in einer einzigen Betriebsart betrieben zu werden, in welcher der Bildschirm bevorzugt Licht im zweiten Winkelbereich (β₂) abstrahlt.

## Claims

1. A display system for a vehicle, comprising
- a windscreen (10) having a transparent see-through region (D) and an opaque masking region (M), and
- a screen (20) which is directed at a display area (A) arranged in the masking region (M),
wherein the windscreen (10) is equipped in the display area (A) with a reflection layer (4) which is suitable for reflecting the radiation of the screen (20) in order to generate a display image,
**characterised in that** the screen (20) is suitable for operation in a first operating mode and in a second operating mode, wherein the screen emits light within a first angular range (β₁) in the first operating mode and emits light within a second angular range (β₂) in the second operating mode,
wherein the first angular range (β₁) is smaller than the second angular range (β₂).

2. The display system according to claim 1, wherein the screen (20) comprises
- a first planar backlight (21),
- a second planar backlight (22), and
- a transmissive imager (23),
which are arranged surface-to-surface one above the other in the order given,
wherein one of the two backlights (21, 22) emits light within the first angular range (β₁) and the other of the two backlights (21, 22) emits light within the second angular range (β₂).

3. The display system according to claim 2, wherein
- the first planar backlight (21) emits light within the first angular range (β₂), and
- the second planar backlight (22) emits light within the second angular range (β₂) and is designed as a planar light guide (22a) which is provided with a lighting means (22b) suitable for coupling light into the light guide (22a) via a lateral edge, and with coupling-out means (22c) suitable for coupling the light out of the light guide (22a) via a surface facing the imager (23).

4. The display system according to either claim 2 or claim 3, wherein the transmissive imager (23) is designed as a liquid crystal display element.

5. The display system according to any one of claims 2 to 4, wherein the first planar backlight (21) comprises a planar lighting element (21a) and a micro-louver film (21b) arranged between the lighting element (21a) and the second planar backlight (22).

6. The display system according to any one of claims 1 to 5, wherein the reflection layer (4) is designed as
- a metal-containing coating or
- a purely dielectric coating or
- a purely dielectric polymeric film which contains alternating individual layers with different refractive indices.

7. The display system according to any one of claims 1 to 6, wherein the masking region (M) is formed
- by a cover imprintment (8)
- by an opaque polymeric film as part of the intermediate layer (3) and/or
- by a functional element having electrically controllable properties, in particular an electrochromic functional element.

8. The display system according to any one of claims 1 to 7, wherein
- the windshield (10) has an upper edge (O), a lower edge (U), and two lateral edges extending therebetween, and
- the display area (B) is arranged in the portion of the masking region (M) adjoining the lower edge (U).

9. The display system according to any one of claims 1 to 8, wherein the radiation of the screen (20) impinging on the windshield (10) is p-polarised.

10. The display system according to any one of claims 1 to 9, wherein the windshield (10) is a composite pane composed of an outer pane (1) and an inner pane (2), which are connected to one another via a thermoplastic intermediate layer (3).

11. A vehicle having a driver's seat and a front passenger's seat and equipped with a display system according to any one of claims 1 to 10.

12. The vehicle according to claim 11, wherein the display area (A) is arranged in the half of the windshield (10) that is located on the front passenger seat side.

13. The vehicle according to claim 12, wherein the angular range (β₁) is selected in such a way that the display of the display area (A) is not perceptible from the driver's seat.

14. The method according to either claim 12 or claim 13, wherein
- a further display area (A) is arranged in the half of the windshield (10) that is located on the front passenger seat side,
- another screen is directed at the further display area (B), and
- the further screen is only suitable for operation in a single operating mode in which the screen preferably emits light within the second angular range (β₂).

## Revendications

1. Système d'affichage pour un véhicule, comprenant
- un pare-brise (10) comportant une zone de transparence (D) transparente et une zone de masquage (M) opaque et
- un écran (20) qui est dirigé vers une zone d'affichage (A) disposée dans la zone de masquage (M),
dans lequel le pare-brise (10) est équipé dans la zone d'affichage (A) d'une couche réfléchissante (4) qui est appropriée pour réfléchir le rayonnement de l'écran (20) pour la génération d'une image d'affichage,
**caractérisé en ce que**
l'écran (20) est approprié pour fonctionner dans un premier mode de fonctionnement et dans un second mode de fonctionnement, dans lequel l'écran émet de la lumière dans une première plage angulaire (β₁) dans le premier mode de fonctionnement et émet de la lumière dans une seconde plage angulaire (β₂) dans le second mode de fonctionnement,
dans lequel la première plage angulaire (β₁) est inférieure à la seconde plage angulaire (β₂).

2. Système d'affichage selon la revendication 1, dans lequel l'écran (20) comprend
- un premier éclairage de fond plat (21),
- un second éclairage de fond plat (22) et
- un imageur transmissif (23)
qui sont superposées à plat dans l'ordre indiqué, dans lequel l'un parmi les deux éclairages de fond (21, 22) émet de la lumière dans la première plage angulaire (β₁) et l'autre parmi les deux éclairages de fond (21, 22) émet de la lumière dans la seconde plage angulaire (β₂).

3. Système d'affichage selon la revendication 2, dans lequel
- le premier éclairage de fond plat (21) émet de la lumière dans la première plage angulaire (β₂) et
- le second éclairage de fond plat (22) émet de la lumière dans la seconde plage angulaire (β₂) et est réalisé en tant que guide de lumière (22a) plat qui est pourvu d'un moyen d'éclairage (22b) qui est approprié pour coupler la lumière dans le guide de lumière (22a) par l'intermédiaire d'un bord latéral, et est pourvu de moyens de découplage (22c) qui sont appropriés pour découpler la lumière du guide de lumière (22a) par l'intermédiaire d'une surface tournée vers l'imageur (23).

4. Système d'affichage selon la revendication 2 ou 3, dans lequel l'imageur transmissif (23) est réalisé comme un élément d'affichage à cristaux liquides.

5. Système d'affichage selon l'une des revendications 2 à 4, dans lequel le premier éclairage de fond plat (21) comprend un élément d'éclairage (21a) plat et un film microlamellaire (21b) disposé entre l'élément d'éclairage (21a) et le second éclairage de fond plat (22).

6. Système d'affichage selon l'une des revendications 1 à 5, dans lequel la couche réfléchissante (4) est réalisée en tant que
- revêtement contenant du métal ou
- revêtement purement diélectrique ou
- film polymère purement diélectrique qui contient des couches individuelles alternées comportant des indices de réfraction différents.

7. Système d'affichage selon l'une des revendications 1 à 6, dans lequel la zone de masquage (M) est réalisée
- par une impression de recouvrement (8)
- par un film polymère opaque faisant partie de la couche intermédiaire (3) et/ou
- par un élément fonctionnel comportant des propriétés commandables électriquement, en particulier un élément fonctionnel électrochrome.

8. Système d'affichage selon l'une des revendications 1 à 7, dans lequel
- le pare-brise (10) présente un bord supérieur (O), un bord inférieur (U) et deux bords latéraux s'étendant entre eux, et
- la zone d'affichage (B) est disposée dans une section de la zone de masquage (M) adjacente au bord inférieur (U).

9. Système d'affichage selon l'une des revendications 1 à 8, dans lequel le rayonnement de l'écran (20) arrivant sur le pare-brise (10) est polarisé p.

10. Système d'affichage selon l'une des revendications 1 à 9, dans lequel le pare-brise (10) est un vitrage feuilleté constitué d'une vitre extérieure (1) et d'une vitre intérieure (2) reliées entre elles par l'intermédiaire d'une couche intermédiaire (3) thermoplastique.

11. Véhicule comportant une place conducteur et une place passager, équipé d'un système d'affichage selon l'une des revendications 1 à 10.

12. Véhicule selon la revendication 11, dans lequel la zone d'affichage (A) est disposée dans la moitié du pare-brise (10) qui se trouve du côté de la place passager.

13. Véhicule selon la revendication 12, dans lequel la première plage angulaire (β₁) est choisie de telle sorte que l'affichage de la zone d'affichage (A) n'est pas perceptible depuis la place conducteur.

14. Véhicule selon la revendication 12 ou 13, dans lequel
- une autre zone d'affichage (B) est disposée dans la moitié du pare-brise (10) qui se trouve du côté de la place conducteur,
- un autre écran est dirigé vers l'autre zone d'affichage (B) et
- l'autre écran n'est approprié que pour fonctionner dans un seul mode de fonctionnement, dans lequel l'écran émet de préférence de la lumière dans la seconde plage angulaire (β₂).
